(19) Europäisches Patentamt
European Patent Office
Office européen des brevets

(11) **EP 1 742 131 B1**

(12) **EUROPÄISCHE PATENTSCHRIFT**

(45) Veröffentlichungstag und Bekanntmachung des Hinweises auf die Patenterteilung:
**15.02.2012 Patentblatt 2012/07**

(51) Int Cl.:
***G05B 19/404*** *(2006.01)*

(21) Anmeldenummer: **06014121.5**

(22) Anmeldetag: **07.07.2006**

(54) **Verfahren zur Beeinflussung einer Steuerung oder zur Steuerung einer Bewegungseinrichtung und Steuerung oder Steuerungskomponente einer Bewegungseinrichtung**

Method for influencing a controller or for controlling a movement unit and controller or controller components of a movement unit

Procédé destiné à l'influence d'une commande ou pour la commande d'un dispositif de déplacement et commande ou élément de commande d'un dispositif de déplacement

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **08.07.2005 DE 102005032336**

(43) Veröffentlichungstag der Anmeldung:
**10.01.2007 Patentblatt 2007/02**

(73) Patentinhaber: **Fachhochschule Aschaffenburg 63743 Aschaffenburg (DE)**

(72) Erfinder: **Bruhm, Hartmut, Prof. Dr. 64287 Darmstadt (DE)**

(74) Vertreter: **KEIL & SCHAAFHAUSEN Patentanwälte Cronstettenstraße 66 60322 Frankfurt am Main (DE)**

(56) Entgegenhaltungen:
**EP-A- 1 515 209**

- **KRABBES M ET AL: "Reaktive Dynamikzerlegung für überlagerte Antriebsstrukturen" ELEKTRISCH-MECHANISCHE ANTRIEBSSYSTEME: INNOVATIONEN, TRENDS, MECHATRONIK,, 1. Januar 2004 (2004-01-01), Seite 12pp, XP009100060 ISBN: 978-3-8007-2852-7**
- **NEMEC B ET AL: "Implementation of force control on redundant robot" INTELLIGENT ROBOTS AND SYSTEMS, 1998. PROCEEDINGS., 1998 IEEE/RSJ INTE RNATIONAL CONFERENCE ON VICTORIA, BC, CANADA 13-17 OCT. 1998, NEW YORK, NY, USA,IEEE, US, Bd. 2, 13. Oktober 1998 (1998-10-13), Seiten 1314-1319, XP010311517 ISBN: 978-0-7803-4465-5**

EP 1 742 131 B1

**Beschreibung**

Die Erfindung betrifft ein Verfahren zur Beeinflussung der Steuerung oder zur Steuerung einer Bewegungseinrichtung mit mindestens einer ersten Achse und mindestens einer bspw. mit der Bewegung der ersten Achse mitgeführten zweiten Achse, welche eine höhere Reaktionsgeschwindigkeit als die erste Achse aufweist, bei dem mindestens eine Stellgröße der Steuerung zur Ansteuerung der Achsen der Bewegungseinrichtung erfasst wird. Die erste und die zweite Achse sollen dabei vorzugsweise verschiedene, d.h. nicht parallele Bewegungsrichtungen aufweisen bzw. abdecken können. Insbesondere sollen die Drehachsen und/oder die Translationsrichtungen der verschiedenen Achsen nicht starr in dieselben, sondern in verschiedene Richtungen ausgerichtet sein. Die Erfindung bezieht sich ferner auf eine entsprechende Steuerungskomponente sowie eine Steuerung.

Die Bewegungseinrichtung ist insbesondere ein universell einsetzbarer Bewegungsautomat mit mehreren Achsen, deren Bewegung hinsichtlich der Bewegungsfolge und den Wegen bzw. Winkeln durch die Steuerung frei vorgebbar und ggf. sensorbasiert führ- bzw. regelbar sind. Derartige Bewegungsautomaten, bspw. Industrieroboter, sind häufig mit Greifern, Werkzeugen oder anderen Fertigungsmitteln, im Folgenden auch allgemein als Endeffektoren bezeichnet, ausgerüstet, um ihnen vorgegebene Aufgaben erfüllen zu können. Um den Arbeitspunkt der Endeffektoren an beliebige Stellen im Arbeitsraum bringen zu können, sind drei Freiheitsgrade notwendig, die durch drei Achsen der Bewegungseinrichtung realisiert werden können. Soll der Endeffektor an einem bestimmten Arbeitspunkt darüber hinaus jede mögliche Lageorientierung annehmen können, sind drei weitere Achsen notwendig.

Dabei können die Achsen jeweils aneinander montiert sein, so dass bei einer Bewegung einer Achse die in der Bewegungseinrichtung an dieser angebrachten weiteren Achsen bei der Bewegung mitgeführt werden (serielle Kinematik). Alternativ kann eine Bewegungseinrichtung auch eine (zumindest teilweise) parallele Kinematik aufweisen, in der mehrere Aktoren parallel angeordnet sind. Dies ist bspw. bei einer sogenannten Stewart-Plattform der Fall. Der typische Aufbau eines Industrieroboters mit sechs Freiheitsgraden (Achsen) sieht im Grundaufbau drei sogenannte Grundachsen vor, die typischerweise zur Realisierung des translatorischen Bewegungsanteils eingesetzt werden, um den Endeffektor entsprechend den Bewegungsvorgaben an den gewünschten Arbeitspunkt zu bringen. Für die Bewegung des Endeffektors an dem Arbeitspunkt sind häufig drei sogenannte Handachsen vorgesehen, die den rotatorischen Bewegungsanteil des Endeffektors realisieren. Je nach Aufgabe der Bewegungseinrichtung können bei weniger benötigten Freiheitsgraden die Anzahl der Achsen reduziert oder bei einer gewünschten höheren Flexibilität die Anzahl der Achsen erhöht werden. Es gibt auch armartig aufgebaute Industrieroboter, die teilweise parallele Kinematiken bzw. geschlossene kinematische Strukturen, wie bspw. Parallelogrammführungen, aufweisen.

Die Grundachsen sind häufig im Bereich der Basis bzw. des Fußpunkts der Bewegungseinrichtung angeordnet und bewegen typischerweise die gesamte mechanische Struktur der Bewegungseinrichtung oder wesentliche Teile davon, insbesondere auch die Handachsen mit dem Endeffektor. Wegen der hohen zu bewegenden Massen weisen diese Achsen eine im Vergleich zu den Handachsen langsamere Reaktionsgeschwindigkeit auf.

Die Handachsen sind in der Nähe des Endeffektors, welcher als Greifer, Werkzeug oder dgl. ausgebildet sein kann, angeordnet und bewegen im Wesentlichen den Endeffektor und damit nur einen kleinen Teil der mechanischen Struktur der Bewegungseinrichtung. Die zu bewegenden Massen sind klein, und daher ist die Reaktionsgeschwindigkeit der herkömmlicher Weise für die Rotationsbewegung verwendeten Handachsen deutlich höher als die der Grundachsen. Außerdem weisen die Handachsen im Vergleich zu den Grundachsen eine höhere mechanische Eigenfrequenz auf. Sie bieten daher eine gute Voraussetzung für eine Umsetzung der Bewegungsvorgaben mit möglichst hoher Bandbreite.

Bei vielen Bewegungseinrichtungen werden also typischer Weise die Gruppe der im Wesentlichen orientierungsbestimmenden Achsen als Ganzes von der Gruppe der im Wesentlichen positionsbestimmenden Achsen in ihrer Bewegung mitgeführt, so dass die Gruppe der positionsbestimmenden Achsen eine niedrigere Reaktionsgeschwindigkeit aufweist als die Gruppe der orientierungsbestimmenden Achsen.

Jede Achse ist mit einer Steuerung der Bewegungseinrichtung verbunden, von der sie Bewegungskommandos als Signale erhält (Stellgröße). Da die Grundachsen typischerweise für den translatorischen Bewegungsanteil und die Handachsen für den rotatorischen Bewegungsanteil der Gesamtbewegung des Endeffektors eingesetzt werden, ergibt sich aufgrund der unterschiedlichen Reaktionsgeschwindigkeiten von Grund- und Handachsen für den translatorischen Bewegungsanteil eine langsamere Reaktion als für den rotatorischen Bewegungsanteil.

Bei einer Vielzahl von Bewegungseinrichtungs-Anwendungen wird auch für die translatorische Bewegung des Endeffektors eine hohe Reaktionsgeschwindigkeit gefordert, die sich jedoch mit den niedrigen Reaktionsgeschwindigkeiten der Grundachsen häufig nicht erfüllen lässt. Für rein gesteuerte Endeffektor-Bewegungen, die sich aufgrund des fest vorgegebenen Bewegungsablaufs gut vorhersagen und vorplanen lassen, wurden Verfahren zur Steuerung entwickelt, bei denen insbesondere kleine transiatorische Bewegungen auch mit Hilfe der Handachsen erzeugt werden. Da von den Handachsen nur ein vergleichsweise geringer Teil der mechanischen Gesamtstruktur der Bewegungseinrichtung bewegt werden muss, können diese Bewegungen schnell ausgeführt werden.

Dies wird durch ein Steuerprogramm realisiert, welches in Kenntnis der durch jede Achse der Bewegungseinrichtung bewegten Massen einen Gesamtbewegungsablauf (Kinematik) ermittelt, welcher ausgehend von der Ist-Position der Bewegungseinrichtung die Soll-Position der Bewegungseinrichtung mit einer minimalen Massenbewegung erreicht. Die Realisierung einer solchen Steuerung erfordert jedoch einen hohen Rechenaufwand und lässt sich nicht flexibel für Systeme einsetzten, die bspw. aufgrund einer sensorgeführten Bahnführung auf Abweichungen schnell und bspw. auch ausschließlich auf Basis von Informationen aus der Vergangenheit, d.h. in Echtzeit, reagieren müssen.

Aus der Druckschrift M. Krabbes et al. "Reaktive Dynamikzerlegung für überlagerte Antriebsstrukturen", Elektrisch-mechanische Antriebssysteme: Innovation, Trends, Mechatronik, 1. Januar 2004, Seite 12 ff., ist ein Verfahren für eine reaktive Dynamikzerlegung einer Stellgröße bekannt, welche eine langsame (träge) Antriebsstruktur und eine agile Antriebsstruktur aufweist. Die agile Bewegung ergibt sich aus der Differenz zwischen Originalbewegung und träger Bewegung, wobei diese in ihrem Bewegungsbereich beschränkt ist.

Die Aufgabe der Erfindung liegt darin, eine flexibel und schnell, insbesondere in Echtzeit reagierende Steuerung einer Bewegungseinrichtung zu schaffen, mit der auch eine translatorische Bewegung des Endeffektors mit einer hohen Reaktionsgeschwindigkeit durchgeführt werden kann.

Diese Aufgabe wird durch ein Verfahren mit den Merkmalen des Anspruchs 1, eine Steuerungskomponente mit den Merkmalen des Anspruchs 9 und eine Steuerung mit den Merkmalen des Anspruchs 14 gelöst. Dabei ist erfindungsgemäß vorgesehen, dass die von der Steuerung ausgegebene Stellgröße frequenzabhängig und/oder in Abhängigkeit dynamischer Eigenschaften der Achsen (13, 14) in mindestens zwei Signale (frequenzabhängige bzw. dynamische Stellgrößen) aufgeteilt wird, welche zur Ansteuerung verschiedener Achsen verwendet werden. Dadurch wird die Stellgröße insbesondere auch für die translatorische Bewegung des Endeffektors abhängig von der geforderten Änderungsgeschwindigkeit zerlegt und den Achsen mit entsprechender Reaktionsgeschwindigkeit zugewiesen. Die Achsen, für die die Stellgröße bspw. entsprechend ihres hoch- und niederfrequenten Signalanteils zerlegt wird, sollten dabei bezüglich ihres Bewegungseinflusses auf den Endeffektor vorzugsweise nicht orthogonal zueinander angeordnet sein, damit die Aufteilung der Bewegung auf verschiedene Achsen entsprechend der geforderten Reaktionsgeschwindigkeit frei möglich ist und die Achsen bezüglich des Endeffektors eine translatorische Bewegung in der gewünschten Richtung hervorrufen können. Neben, vorzugsweise aber auch zusätzlich zu einer rein frequenzabhängigen Aufteilung der Stellgröße können bei der Aufteilung auch dynamische Eigenschaften der einzelnen Achsen berücksichtigt werden. Dazu zählen insbesondere das Beschleunigungsvermögen und das mechanische Schwingungsverhalten der Achsen. Die dynamischen Eigenschaften der Achsen hängen auch von der Position der Achsen und/oder den Betriebsbedingungen der Bewegungseinrichtung ab. Die Berücksichtigung dieser Größen führt dazu, dass die Bewegungsaufteilung durch Aufteilung der Stellgröße adaptiv erfolgt und automatisch an sich ändernde dynamische Eigenschaften der Achsen angepasst wird, die insbesondere von der Stellung der Achsen und von den Betriebsbedingungen der Bewegungseinrichtungen abhängen. Dazu zählen mitgeführte Lastmassen bspw. durch mitbewegte Achsen, Endeffektoren oder gegriffene Gegenstände.

In einer bevorzugten Ausgestaltung des Verfahrens wird das Signal mit dem niederfrequenten Signalanteil der Stellgröße der ersten Achse oder einer ersten Gruppe von mehreren Achsen und das Signal mit dem hochfrequenten Anteil der Stellgröße der zweiten Achse oder einer zweiten Gruppe von mehreren Achsen zugeordnet, wobei die Achsen der ersten Gruppe eine niedrigere Reaktionsgeschwindigkeit aufweisen als die Achsen der zweiten Gruppe. Hierbei wird der niederfrequente Signalanteil der Stellgröße also den Grundachsen und der hochfrequente Signalanteil der Stellgröße den Handachsen der Bewegungseinrichtung als Bewegungskommando zugeführt. Dabei können aus dem nieder-und/oder hochfrequenten Signal der Stellgröße auch Bewegungskommandos für mehrere Achsen in ihrer jeweiligen Gruppe abgeleitet werden, sofern der translatorische Stellbefehl bspw. nicht durch die Bewegung nur einer einzigen Achse ausgeführt werden kann.

Erfindungsgemäß kann die Stellgröße auch in mehr als zwei Signale mit verschiedenen Frequenzbereichen aufgeteilt werden. Die Signale (frequenzabhängige Stellgrößen) werden dann bspw. mit steigender Frequenz jeweils den Achsen bzw. Gruppen von Achsen mit entsprechend steigender Reaktionsgeschwindigkeit der Achsen zugeordnet. Eine solche Lösung ist bspw. für Bewegungseinrichtungen mit Redundanzen in der Kinematik möglich, in der Bewegungsabläufe alternativ durch Bewegungen verschiedener Achsen erreicht werden können. Dies können Industrieroboter mit mehr als sechs Achsen sein. Bei derartigen Industrierobotern lässt sich das Verfahren besonders gut anwenden, wenn Bewegungsabläufe alternativ durch Grundachsen mit langsamer Reaktionsgeschwindigkeit und Handachsen mit hoher Reaktionsgeschwindigkeit verwirklicht werden können. Natürlich sind Bewegungseinrichtungen mit Redundanzen in der Kinematik auch sehr gut geeignet, um das erfindungsgemäße Verfahren in der Ausgestaltung mit nur zwei Frequenzbereichen zu implementieren.

Innerhalb der Steuerung kann die Stellgröße mittels insbesondere digitaler, in einer Software realisierter Hoch- und/oder Tiefpassfilter in Signale mit verschiedenen Frequenzbereichen aufgeteilt werden. Durch die Realisierung als digitale Hoch- bzw. Tiefpassfilter kann das erfindungsgemäße Steuerungskonzept einfach in bestehende Steuerungen implementiert werden, da diese meist lediglich im Bereich der Software angepasst werden müssen und die Hardware weiterverwendet werden kann. Da Hochpass und Tiefpass vorzugsweise derart aufeinander abgeglichen sein sollten, dass sich ihre Übertragungsfunktionen zu eins addieren, kann eine Frequenzweiche auch mittels nur eines Hoch- oder Tiefpasses aufgebildet werden, dessen Ausgangssignal in dem zweiten Signalpfad von dem Eingangssignal abgezogen wird.

Dabei sind die Filtereigenschaften der Hoch- und/oder Tiefpassfilter in einer bevorzugten Ausgestaltung der Erfindung insbesondere durch Parameter vorgebbar. Damit kann die Erfindung problemlos in bestehende Bewegungssteuerungssysteme integriert und durch eine Variation bspw. der Übergangsfrequenz von dem niederfrequenten zu dem hochfrequenten Signal an Bewegungseinrichtungen mit unterschiedlichem dynamischen Verhalten der Achsen angepasst werden. Weitere Variationsmöglichkeiten ergeben sich erfindungsgemäß in Bezug auf Typ und Ordnung der Filter, wobei es insbesondere eine charakterisierende Eigenschaft der Erfindung ist, dass die einzelnen Filter untereinander so abgestimmt werden, dass die Bewegungsvorgaben im gesamten Frequenzbereich möglichst unverfälscht umgesetzt werden. Dabei können ggf. auch die frequenzabhängigen Eigenschaften der mechanischen Struktur der Bewegungseinrichtung berücksichtigt und ausgeglichen werden, bspw. eine Amplitudenerhöhung durch mechanische Resonanz.

Erfindungsgemäß kann bei der Aufteilung der Stellgröße mittels einer Projektion insbesondere auch unter Berücksichtigung der Ist-Position der Achsen, überprüft werden, welche Bewegungsanteile der Stellgröße durch welche Achsen bzw. Gruppen von Achsen ausführbar sind. Die Projektion kann durch Multiplikation mit einer geeigneten Matrix, insbesondere der Pseudoinversen der Jacobi-Matrix, in an sich bekannter Weise ausgeführt werden. Durch die Projektion wird gemäß der Erfindung also herausgefiltert, welche insbesondere translatorischen Bewegungsanteile in der jeweiligen Achs- bzw. Armstellung durch die reaktionsschnellen Handachsen ausgeführt werden können oder entsprechend einer bestimmten Vorgabe ausgeführt werden sollen. In kinematisch überbestimmten Situationen wird durch Projektion der Bewegungsvorgaben auf geeignete, insbesondere durch ausgewählte Achsen definierte Unterräume des Bewegungsraumes eine Näherungslösung erreicht, so dass bspw, eine besonders schnelle und exakte Positionierung des Endeffektors zu Lasten von dessen Orientierungsgenauigkeit ermöglicht wird. Die Projektion auf einen derartigen Unterraum erfolgt durch Multiplikation mit der Pseudoinversen eines Teils der Jacobi-Matrix.

Mit der erfindungsgemäßen Lösung können also kinematisch überbestimmte Situationen beherrscht werden. Durch die erfindungsgemäße Projektion werden jeweils auf Basis der aktuellen Stellung der Achsen die kinematischen Möglichkeiten zur Umsetzung eines Stellbefehls ermittelt. Es ist daher nicht erfindungsgemäß, dass eins-zu-eins Redundanzen zwischen zwei beteiligten Achsen vorliegen, weil durch die Projektion jeweils eine an die aktuellen Positionen aller beteiligten Achsen angepasste optimale Aufteilung erfolgt.

Erfindungsgemäß wird das Verfahren derart realisiert, dass die frequenzabhängigen und/oder die in Abhängigkeit der vorerwähnten dynamischen Eigenschaften der Achsen aufgeteilten Signale als Korrekturgrößen zu einer Hauptstellgröße erzeugt werden. Die Korrekturgrößen werden dann einfacher Weise zu den Hauptstellgrößen addiert. Auf diese Weise kann die Erfindung besonders einfach auch in bereits bestehende Steuerungen oder Regelungen integriert werden.

Um die dynamischen Eigenschaften der Achsen auf einfache Weise zu berücksichtigen, kann insbesondere den Achsen bzw. Gruppen von Achsen mit niedrigerer Reaktionsgeschwindigkeit jeweils ein eigener dynamischer Filter, d.h. ein Filter zur Berücksichtigung der dynamischen Eigenschaften der Achse, zugeordnet sein. Dadurch ist es möglich, für die Gruppe der trägen Achsen, d.h. der Achsen mit niedrigerer Reaktionsgeschwindigkeit, die bspw. hochdynamischen Anteile der Bewegungsvorgaben auszufiltern und diese der Gruppe der flinken

Achsen, d.h. der Achsen mit höherer Reaktionsgeschwindigkeit, in Abhängigkeit der individuellen dynamischen Achsen zuzuleiten, soweit dies kinematisch möglich ist. Wie zuvor bereits beschrieben wird die kinematische Situation berücksichtigt, indem die herausgefilterten Bewegungsanteile, zu denen neben hochdynamischen Anteilen auch Resonanzfrequenzen der jeweiligen Achsen gehören können, aus den Bewegungsvorgaben auf einen ausgesuchten Unterraum des gesamten Bewegungsraums projiziert werden. Der jeweilige Unterraum ergibt sich insbesondere auch aus den jeweiligen Achsstellungen.

Die dynamischen Filter können erfindungsgemäß eine Anstiegsbegrenzung der Geschwindigkeit und/oder der Beschleunigung der Bewegungsvorgaben vornehmen, um die Dynamik in den Bewegungen bestimmter Achsen entsprechend auf diese Achse abgestimmter Parameter zu begrenzen. Ferner können insbesondere abhängig von der Position der Achsen und/oder deren Betriebsbedingungen spezielle Frequenzen der Bewegungsvorgaben unterdrückt werden, bei denen die Achse bspw. unerwünschte Resonanzen zeigt.

Neben einer reinen Ansteuerung von im Voraus festgelegten Bewegungsabläufen der Bewegungseinrichtungen lässt sich das erfindungsgemäße Steuerungsverfahren auch besonders vorteilhaft verwenden, wenn die Bewegung der Bewegungseinrichtung bspw. aufgrund von Sensorinformationen geregelt wird. Im Gegensatz zu einer reinen Steuerung, bei der die Bewegungseinrichtung entlang einer definiert vorgegebenen Bahn verläuft, werden bei einer Regelung oder einer kombinierten Steuerung und Regelung Abweichungen von einem vorgegebenen Sollwert korrigiert. Dies ist bspw. bei einer sensorbasierten Bahnführung der Fall, bei der geeignete Sensoren überprüfen, ob die Bewegungseinrichtung einen relativ zu einem bearbeiteten Werkstück vorgegebenen Bewegungsablauf tatsächlich einhält. Entsprechendes ergibt sich auch bei einer automatischen Höhenführung, die einen bestimmten Abstand des Arbeitspunkts des an der Bewegungseinrichtung befestigten Endeffektors zu dem Werkstück einhalten soll. Eine derartige Bahnführung zur Höhen- und/oder Seitenführung kann vollständig sensorbasiert geregelt oder durch eine Kombination einer Steuerung für einen vorgegebenen Bewegungsablauf und eine Regelung für Abweichungen davon realisiert werden. Unabhängig davon, ob die Steuerung eine ganz oder teilweise geregelte Endeffektor-Bewegung vorsieht, treten bei Regelungsprozessen, welche eine unerwartete Abweichung von einer vorgegebenen Soll-Position ausregeln sollen, immer wieder schnelle Endeffektor-Bewegungen auf, die durch die erfindungsgemäße Aufteilung in nieder- und hochfrequente Signale der Stellgröße besonders gut und schnell umgesetzt werden können.

Erfindungsgemäß kann die Regelung einen Smith-Prädikator zur Verringerung der Totzeit verwenden, insbesondere wenn die Totzeit im Regelkreis das dynamische Verhalten wesentlich beeinflusst. Der Smith-Prädikator ermöglicht eine schnellere Einstellung von Regelkreisen mit Totzeit, indem die verschiedenen Teilsysteme einer Regelung, welche bspw. die Robotermechanik, das Antriebssystem, das Sensorsystem, Laufzeiten und Einflüsse durch Filteralgorithmen im Rahmen der Signalverarbeitung oder dgl. betreffen, durch Verwendung von a Priori-Wissen in Verbindung mit experimentellen Untersuchungen durch ein einfacher handhabbares Ersatzsystem mit einer entsprechend modellierten Übertragungsfunktion beschrieben werden. Verschiedene Totzeitbeiträge werden zu einer resultierenden Totzeit zusammengefasst und die Restdynamik durch eine Zeitkonstante dominiert. Der so gebildete Smith-Prädikator wird vorzugsweise getrennt nach totzeitfreiem und totzeitbehaftetem Anteil als zweistufiges Rechenmodell parallel zur Regelstrecke installiert. Durch dieses in der Praxis besonders schnell berechenbare Modell kann der destabilisierende Einfluss der Totzeit in dem Regelkreis daher deutlich vermindert werden. Mit dem Smith-Prädikator können also die Dynamik und Genauigkeit des Regelkreises verbessert werden.

Ferner kann in die Steuerung erfindungsgemäß eine Vorsteuerung integriert werden, um das Ansprechverhalten der Achsen und damit die Dynamik der implementierten Steuerung und/oder Regelung zu verbessern. Durch die Vorsteuerung kann einzelnen oder allen Achsen neben dem Lagesollwert ein bspw. durch numerische Differentiation zu gewinnendes Vorsteuersignal zugeführt werden.

Die Erfindung betrifft ferner eine insbesondere zur Verwendung des vorbeschriebenen Verfahrens geeignete Steuerungskomponente für eine Bewegungseinrichtung mit mindestens einer ersten Achse und mindestens einer zweiten Achse, welche eine höhere Reaktionsgeschwindigkeit aufweist als die erste Achse, wobei eine von der Steuerung ausgegebene Stellgröße zur Ansteuerung der Achsen der Bewegungseinrichtung verarbeitet wird. Um eine hohe Reaktionsgeschwindigkeit der Endeffektor-Bewegung zu erreichen, ist erfindungsgemäß vorgesehen, dass die Steuerung eine Frequenzweiche zur frequenzabhängigen Aufteilung der Stellgröße und/oder zumindest den Achsen mit niedrigerer Reaktionsgeschwindigkeit zugeordnete dynamische Filter zur Aufteilung der Stellgrößen in Anhängigkeit von dynamischen Eigenschaften der Achsen in mindestens zwei Signale aufweist.

Diese als von der Frequenz der Bewegungsvorgaben oder dynamischen Achseigenschaften abhängige Stellgrößen ausgebildeten Signale werden jeweils der ersten und der zweiten Achse bzw. entsprechenden Gruppen von Achsen zugeordnet, wobei die jeweilige Reaktionsgeschwindigkeit der Achse bzw. der Gruppe von Achsen berücksichtigt wird. Durch diese Aufteilung der Bewegungsvorgabe werden Grund- und Handachsen der Bewegungseinrichtung entsprechend ihren unterschiedlichen dynamischen Eigenschaften optimal eingesetzt. Träge reagierende Grundachsen der Bewegungseinrichtung übernehmen die bspw. niederfrequenten Bewegungsanteile, d.h. die Grobmotorik mit typischerweise relativ großen Amplituden. Die flink reagierenden Handachsen der Bewegungseinrichtung sind dagegen für die bspw. hochfrequenten Bewegungsanteile zuständig, die insbesondere auch bei einem geregelten Bewegungsablauf aufgrund von Regelabweichungen auftreten können. Die hochfrequenten Bewegungsanteile betreffen insbesondere die Feinmotorik mit typischerweise relativ kleinen Amplituden.

Erfindungsgemäß kann die Frequenzweiche als digitaler Hoch- und/oder Tiefpassfilter ausgebildet und insbesondere als parametrierbares Programm in die Steuerung integriert sein. Dadurch kann die Steuerung flexibel an unterschiedliche Bewegungseinrichtungen mit Achsen verschiedener Dynamik angepasst werden. Dabei kann eine Kombination von einem Hochpass- und/oder einem Tiefpassfilter eingesetzt werden, die so aufeinander abgestimmt sind, dass die gewünschte Bewegung des Endeffektors bis zu möglichst hohen Frequenzen in Bezug auf Amplitude und Phase unverfälscht realisiert wird. Falls das Stellsignal in mehr als zwei Frequenzbereiche aufgeteilt wird, sind innerhalb der Frequenzweiche weitere Filter erforderlich, die dann als Bandpass auszuführen sind. Es müssen auch bei dieser Realisierungsvariante alle Filter wie vorbeschrieben aufeinander abgestimmt werden.

Ein dynamischer Filter kann bspw. auch durch ein in der Steuerung ablaufendes, parametrierbares Programm als ein Filter zur Begrenzung des Beschleunigungs- und/oder Geschwindigkeitsanstiegs der Bewegungsvorgaben und/oder ein Filter zur Unterdrückung spezieller Frequenzen, bspw. als Notch-Filter, ausgebildet sein.

In die Steuerungskomponente, insbesondere in die Frequenzweiche und/oder die den jeweiligen Achsen zugeordneten Filter, kann ein Projektionsblock zum Aufteilen der Bewegungsanteile auf die entsprechenden Achsen integriert sein, um die erforderlichen kinematischen Projektionen durchzuführen.

Ferner kann in die Steuerungskomponente eine Recheneinheit zur Durchführung einer differentiellen oder absoluten Transformation zur Erzeugung einer Stellgröße für die Achskoordinaten integriert sein. Insbesondere wenn die Steuerung oder Regelung auf Basis von Stellgrößen für die Geschwindigkeit/Drehzahl vorgenommen wird, können auf diese Weise einfach bspw. mittels einer Matrixmultiplikation die Stellgrößen für die einzelnen Achsen erzeugt werden. Positionsstellgrößen insbesondere kleiner Amplitude können gut approximiert werden.

In einer einfach zu integrierenden Ausführungsform kann die Steuerungskomponente oder die gesamte Steuerung als Computerprogammprodukt aufgebaut sein. Als Computerprogramm kann die Steuerungskomponente besonders einfach in bereits bestehende Steuerungen eingebaut oder mit diesen verbunden als Gesamtsteuerung angeboten werden. Natürlich lassen sich die erfindungsgemäße Steuerungskomponente und das vorbeschriebene Verfahren auch hardwaremäßig, bspw, in Form eines elektronischen Schaltkreises, implementieren.

Die Erfindung betriff auch eine Gesamtsteuerung für eine Bewegungseinrichtung mit mindestens einer ersten Achse und mindestens einer zweiten Achse, welche eine höhere Reaktionsgeschwindigkeit aufweist als die erste Achse, wobei die Steuerung eine Stellgröße zur Ansteuerung der Achsen ausgibt. In die Steuerung ist die vorbeschriebene Steuerungskomponente zur Durchführung der frequenzabhängigen und/oder in Abhängigkeit dynamischer Achseigenschaften erfolgenden Aufteilung der Stellgröße in mindestens zwei Signale integriert. Die Steuerung kann eine Recheneinheit mit einer absoluten und/oder differentiellen kinematischen Transformation aufweisen, welche insbesondere mit der Steuerungskomponente gemeinsam genutzt werden kann, um die Stellgrößen für die Achskoordinaten zu erzeugen.

Zusätzlich kann in die Steuerung eine insbesondere sensorbasierte Positionsregelung, bspw. zur Höhen- und/oder Seitenführung, integriert sein. Dazu weist die Steuerung Sensoranschlüsse auf, die an die jeweils verwendeten Sensoren, bspw. Laser-Reflexionslichttaster zur Höhenmessung, Ultraschallsensoren oder dgl., anpassbar sind.

Die Positionsregelung ist vorzugsweise als eine Proportional-Integral-Regelung und/oder eine Regelung mit doppelt integrierendem Regelverhalten, ggf. mit Totzeitkompensation, ausgebildet. Eine derartige Steuerung mit proportionalen und/oder integralen Regelanteilen gewährleistet eine hohe Regelgüte. Regler mit doppelt integrierendem Regelverhalten ($I^2$) können vorteilhaft verwendet werden, um rampenförmige Störungen ohne stationären Fehler ausgleichen zu können. Natürlich lässt sich die Erfindung mit einer Vielzahl von vorbekannten Regelverfahren und Reglertypen einsetzen, ohne auf die vorbeschrieben gängigen Reglertypen beschränkt zu sein. Unter Einbeziehung eines sogenannten Smith-Prädikators kann zusätzlich eine besonders effektive Totzeitkompensation durchgeführt werden, um die Gesamtdynamik des Systems weiter zu verbessern.

Weitere Vorteile, Merkmale und Anwendungsmöglichkeiten der Erfindung ergeben sich auch aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der vorliegenden Erfindung, auch unabhängig von der Zusammenfassung in den Ansprüchen oder deren Rückbezügen.

Es zeigen:

Fig. 1 den Ablauf der Steuerung einer Bewegungseinrichtung mit einer erfindungsgemäß frequenzabhängigen Aufteilung der Stellgröße in Form eines Wirkungsplans bei einer ersten Ausführungsform;

Fig. 2a ein Diagramm zur Realisierung der frequenzabhängigen Aufteilung mittels digitaler Filter bei der Steuerung gemäß Fig. 1 in einer ersten Variante;

Fig. 2b ein Diagramm zur Realisierung der frequenzabhängigen Aufteilung mittels digitaler Filter bei der Steuerung gemäß Fig. 1 in einer zweiten Variante;

Fig. 2c die Bode-Diagramme zu den digitalen Filtern;

Fig. 3 eine schematische Ansicht eines Roboters zur automatischen Höhenführung;

Fig. 4 eine Detailansicht der Roboterhand des Roboters gemäß Fig. 3;

Fig. 5 eine Seitenansicht der Roboterhand des Roboters gemäß Fig. 3;

Fig. 6 eine Sensoranordnung zur automatischen Höhenführung;

Fig.7 den Ablauf der Steuerung einer Bewegungseinrichtung mit einer erfindungsgemäß frequenzabhängigen Aufteilung der Stellgröße in Form eines Wirkungsplans bei einer zweiten Ausführungsform;

Fig. 8     den Ablauf der Steuerung einer Bewegungseinrichtung mit einer erfindungsgemäß frequenzabhängigen Aufteilung der Stellgröße in Form eines Wirkungsplans bei einer dritten Ausführungsform;

Fig. 9     den Ablauf der Steuerung einer Bewegungseinrichtung mit einer erfindungsgemäß frequenzabhängigen Aufteilung der Stellgröße in Form eines Wirkungsplans bei einer vierten Ausführungsform;

Fig. 10    den Ablauf der Steuerung einer Bewegungseinrichtung mit einer erfindungsgemäßen Aufteilung der Stellgröße in Abhängigkeit dynamischer Achseigenschaften in Form eines Wirkungsplans bei einer fünften Ausführungsform;

Fig. 11    den Aufbau eines dynamischen Filters zur Anstiegsbegrenzung gemäß Fig. 10;

Fig. 12    das Übertragungsverhalten des dynamischen Filters gemäß Fig. 11;

Fig. 13    das Bode Diagramm eines als Notch-Filter ausgebildeten dynamischen Filters gemäß Fig. 10.;

Fig. 14    den Ablauf der Steuerung einer Bewegungseinrichtung mit einer erfindungsgemäß frequenzabhängigen Aufteilung der Stellgröße in Form eines Wirkungsplans bei einer sechsten Ausführungsform und

Fig. 15    den Ablauf der Steuerung einer Bewegungseinrichtung mit einer erfindungsgemäß frequenzabhängigen Aufteilung der Stellgröße in Form eines Wirkungsplans bei einer siebten Ausführungsform.

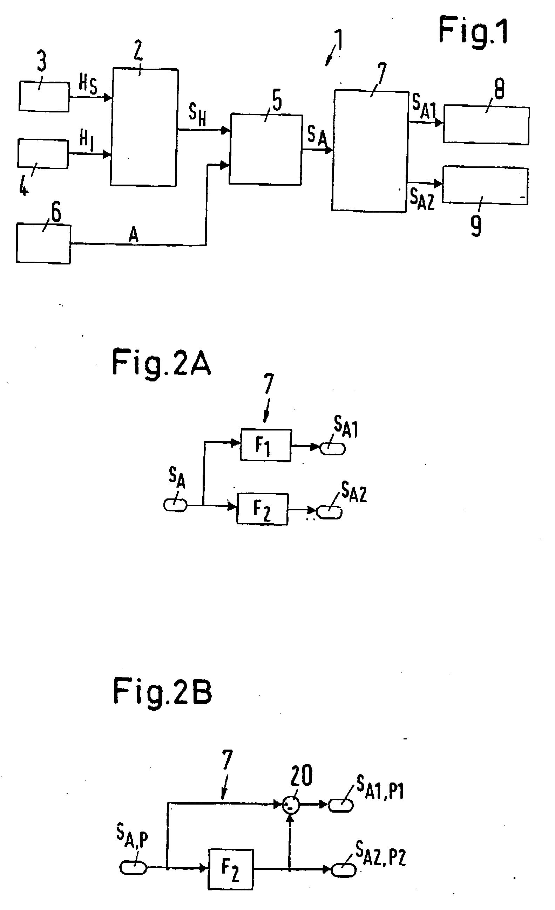

In Fig. 1 ist eine Anwendung des erfindungsgemäßen Verfahrens zur Steuerung einer Bewegungsrichtung in Form eines Industrieroboters mit Handachsen und Grundachsen gemäß einer ersten Ausführungsform als Wirkungsplan am Beispiel einer automatischen, senaorgeführten Höhenführung dargestellt. Wegen des geschlossenen Wirkungsablaufs und dem in dem Wirkungsablauf enthaltenen Soll-/Istwertvergleich handelt es sich im engeren Sinne um eine Regelung, wobei der Begriff "Steuerung" im Folgenden sowohl für eine Steuerung im engeren Sinne ohne Regeleingriff als auch für eine Regelung oder eine kombinierte Steuerung und Regelung verwendet wird, bei der ein vorgebbarer Sollwert bzw. Sollwertverlauf eingestellt, d.h. geregelt, wird.

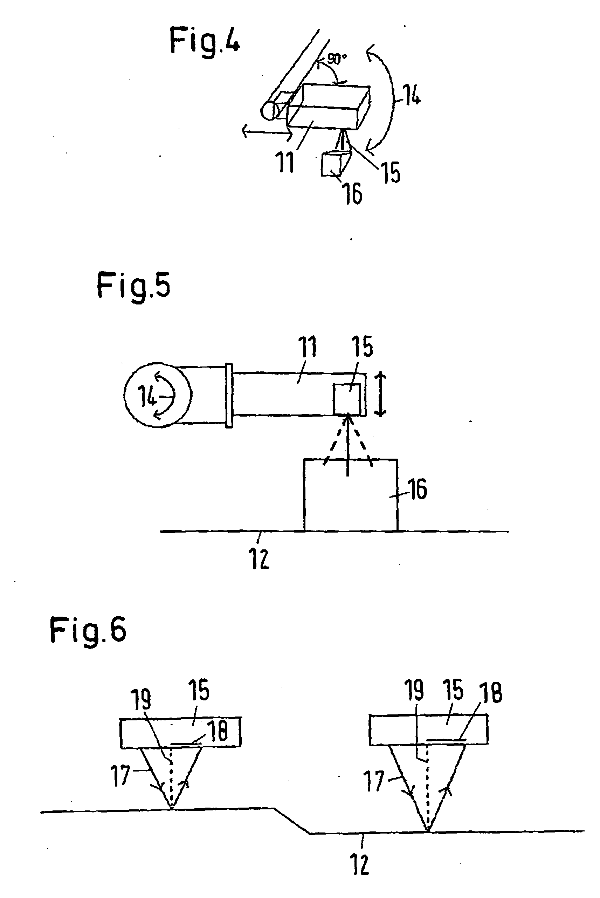

Die in Fig. 1 gezeigte Steuerung 1 eines Industrieroboters gemäß einer ersten Ausführungsform der Erfindung weist einen als Positionsregler ausgebildeten Regler 2 für die automatische Höhenführung auf, welcher eine Stellgröße $S_H$ ausgibt. Die Stellgröße $S_H$ ist ein Maß für die benötigte Höhenänderung des Industrieroboters. Als Eingangsgrößen des Reglers 2 dienen ein Höhensollwert $H_s$ und ein Höhenistwert $H_1$ eines Sollwertgebers 3 und eines Istwertgebers 4. Der Höhensollwert $H_s$ kann an dem Sollwertgeber 3 eingestellt werden. Der Istwertgeber 4 ermittelt die Höhe des Roboters relativ zu einer Arbeitsfläche, bspw. durch eine geeignete Sensoranordnung, die beispielhaft in Fig. 6 dargestellt ist und später erläutert wird. Aus der Differenz zwischen dem Höhensollwert $H_s$ und dem Höhenistwert $H_I$ ermittelt der Regler in an sich bekannter Weise die Stellgröße $S_H$ für die Höhe des Roboters und gibt diese zur Ansteuerung der Achsen des Roboters aus.

Die beispielhaft erläuterte Höhenführung soll den Anwendungsbereich der Erfindung nicht einschränken. In analoger Weise kann eine automatische Seitenführung oder eine Ausgleichsbewegung in einer oder mehreren beliebig vorgegebenen Richtungen realisiert werden. Bei einer mehrkanaligen Ausführung des erfindungsgemäßen Verfahrens, bspw, einer simultanen Höhen- und Seitenführung, sind die Sollwertvorgabe, die Sensorik zur Istwerterfassung und der Positionsregler jeweils in entsprechender Vielfachheit vorzusehen und aufeinander abzustimmen.

Der Regler 2 weist eine proportionale und eine integrale Regelkomponente auf, so dass es sich um einen sogenannten "PI-Regler" handelt. Es kann zusätzlich auch ein doppelt integrierendes Regelverhalten mit einem $I^2$-Anteil eingesetzt werden. Aus der Stellgröße für die Höhe $S_H$ errechnet eine Recheneinheit 5 der Steuerung 1 eine Stellgröße $S_A$ für die Achskoordinaten, welche zur Ansteuerung der einzelnen Achsen verwendet werden kann. Neben der Stellgröße $S_H$ aus dem Regler 2 der Steuerung 1 erhält die Recheneinheit 5 dazu Informationen über die aktuelle Achslage A (Istwert der Gelenkwinkel) der verschiedenen Achsen des zu steuernden Roboters von einem Lageistwertgeber 6.

Die Umrechnung der in kartesischen Koordinaten vorliegenden Stellgröße $S_H$ für die Höhe in eine Stellgröße $S_A$ der zugehörigen Achskoordinaten erfolgt mittels einer bspw. differentiellen Koordinatentransformation unter Verwendung einer Jacobi-Matrix, die eine besonders schnelle Umrechnung erlaubt. Da die Jacobi-Matrix bzw. ihre Inverse sich nur langsam ändert, kann diese auch in einem im Hintergrund ablaufenden Rechenprozess aktualisiert werden, so dass die darauf entfallende Rechenzeit nicht als Totzeit im Regelkreis wirksam wird. Dies führt zu einer totzeitoptimierten Steuerung 1 des Regelkreises. Es sind auch andere Koordinatentransformationsverfahren anwendbar, die in der Regel jedoch mit einem höheren Rechenaufwand verbunden sind.

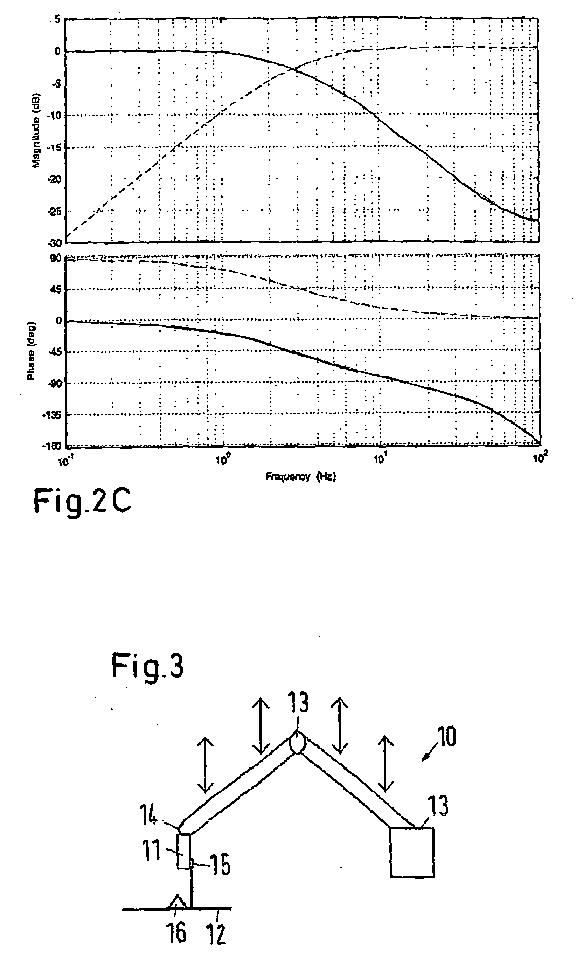

Wenn die Bewegungseinrichtung (Roboter) sich in einer geeigneten Achsstellung befindet, gestaltet sich die Umrechnung der Stellgröße $S_H$ in die Stellgröße $S_A$ in Achskoordinaten unter Umständen noch einfacher, weil im günstigsten Fall nur ein einziges Element der Jacobi-Matrix benötigt wird. in den Fig. 3 bis 5 ist eine solche besonders geeignete Achsstellung dargestellt. Auch bei beliebigen Achsstellungen des Roboters bzw. der Bewegungseinrichtung muss in der Regel nicht die komplette Jacobi-Matrix berechnet werden, sondern für jede Stellgröße bzw. für jede Raumrichtung, in der eine Bewegungskorrektur erfolgen soll, nur eine Spalte oder eine Linearkombination mehrerer Spalten. Hier ist auch auf eine geeignete Wahl des in Bezug zum Endeffektor zu definierenden Bezugskoordinatensystems zu achten, dessen Achsen vorzugsweise in Richtung der gewünschten Bewegungskorrekturen zeigen sollten.

Vor der Ausgabe der Stellgröße $S_A$ für die Achskoordinaten wird die Stellgröße $S_A$ bei der vorgeschlagenen Steuerung 1 einer erfindungsgemäßen Frequenzweiche 7 zugeführt, welche die Stellgröße $S_A$ für die Achskoordinaten frequenzabhängig in zwei frequenzabhängige Stellgrößen $S_{A1}$ und $S_{A2}$ aufteilt, die entsprechenden Achssteuerungen 8, 9 zugeordnet werden.

Dabei wird der niederfrequente Anteil $S_{A1}$ der Stellgrößen den Achsen des Roboters, welche eine niedrigere Reaktionsgeschwindigkeit aufweisen, bzw. deren Achssteuerung 8 zugeordnet. Dies sind normalerweise die Grundachsen des Roboters, welche im Basisbereich des Roboters angeordnet sind und alle ihnen übergeordneten Achsen, insbesondere die im Bereich der Roboterhand angeordneten Handachsen, mitführen.

Der hochfrequente Anteil der Stellgröße $S_{A2}$ wird der Achssteuerung 9 zur Steuerung der Achsen mit höherer Reaktionsgeschwindigkeit zugeteilt, insbesondere den Handachsen.

Durch die Aufteilung der Stellgröße für die Achskoordinaten $S_A$ in eine niederfrequente Stellgröße $S_{A1}$ und eine hochfrequente Stellgröße $S_{A2}$ wird die für die Höhenführung benötigte translatorische Bewegung der Roboterhand sowohl durch die langsam reagierenden Grundachsen eines Roboters als auch durch die schnell reagierenden Handachsen des Roboters realisiert. Die Grundachsen werden durch die Achssteuerung 8 und die Handachsen durch die Achssteuerung 9 angesteuert.

Im Gegensatz zur herkömmlichen Steuerung im Rahmen eines Regel- und/oder Steuerverfahrens, bei denen die translatorische Bewegung üblicherweise durch die Grundachsen und die rotatorische Bewegung üblicherweise durch die Handachsen der Bewegungseinrichtung ausgeführt wurde, wird durch das nun vorgeschlagene Verfahren zur Ansteuerung einer Bewegungseinrichtung eine Zuordnung zu den jeweiligen Hand- und Grundachsen der Robotereinrichtung entsprechend der geforderten Änderungsfrequenz vorgegeben, so dass auch schnelle translatorische Änderungsbewegungen mit der Steuerung erreichbar sind. Aufgrund der frequenzabhängigen Aufteilung der Stellgröße $S_A$ kann dieses Verfahren universell für jede gesteuerte, geregelte oder gesteuerte und geregelte Steuerung einer beliebigen Bewegungseinrichtung einfach genutzt werden.

Dies ist bei der beispielhaft beschriebenen Höhenführung von Interesse, wenn der Roboter mit dem daran festgelegten Arbeitsgerät (Endeffektor) plötzlich auf ein Hindernis stößt und seine Höhe schnell ändern muss. In diesem Fall handelt es sich um eine Regelung. Gleiches gilt bspw. auch für die Führung der Roboterhand mit dem Werkzeug entlang einer vorgegebenen Bahn, die Ecken oder abrupte Richtungsänderungen aufweist. In diesem Fall handelt es sich um eine Steuerung im eigentlichen Sinne. Sofern eine möglichst gleichförmige Bewegung entlang der Bahn gefordert ist, muss beim Anfahren einer Ecke in der Bewegungsbahn zunächst eine schnelle negative Beschleunigung zum Abbremsen der bisherigen Bewegungsrichtung und dann eine schnelle positive Beschleunigung zum Weiterfahren in der neuen Bewegungsrichtung erreicht werden. Dies stellt eine hochfrequente Änderung dar, die erfindungsgemäß durch die schnell reagierenden Handachsen des Roboters ausgeführt wird, während die Grundachsen die Grundbewegung des Roboters übernehmen. Somit lassen sich durch die erfindungsgemäße Ansteuerung auch abrupte Bewegungsänderungen in einer abgefahrenen Bahn, bspw. bei einer Seitenführung, erreichen. Sowohl eine Steuerung als auch Regelung stellen also Anwendungsbereiche des erfindungsgemäßen Verfahrens dar.

Die Frequenzweiche 7 kann, wie in Fig. 2a dargestellt, aus zwei digitalen Filtern mit Hochpass- und Tiefpassverhalten und einer aufeinander abgestimmten Eckfrequenz bestehen. In der Form eines digitalen Filters kann die Frequenzweiche 7 einfach in die Recheneinheit 5 der Steuerung 1 mit integriert sein, bspw. in Form einer Software, welche nach den in Fig. 1 und Fig. 2a bzw. 2b dargestellten Abläufen programmiert ist. Eine derartige Software kann problemlos in bestehende Steuerungssysteme bzw. deren Programmcode eingebunden werden.

Wie in Fig. 2a dargestellt, wird die Frequenzweiche 7 durch einen digitalen Tiefpassfilter mit der Übertragungsfunktion $F_1$ und einen digitalen Hochpassfilter mit der Übertragungsfunktion $F_2$ gebildet. Der Hochpass und der Tiefpass können für diese Zwecke in erster Ordnung realisiert sein, wobei sich eine Übergangsfrequenz in der Größenordnung von 3 Hz für viele Fälle als sinnvoll erwiesen hat. Durch Variation der Übergangsfrequenz kann die Frequenzweiche an andere Bewegungseinrichtungen angepasst werden, deren Achsgruppen ein anderes dynamisches Verhalten aufweisen.

Der Tiefpassfilter kann ein PT1-Glied, also im Grunde ein Proportional-Glied, sein, bei dem sich das Ausgangssignal dem Eingangssignal verzögert annähert. Dieses Tiefpassverhalten wird daher ausgenutzt, um die Ansteuerung der vergleichsweise langsam reagierenden Grundachsen zu regeln. Die Übertragungsfunktion $F_1$ kann dabei realisiert werden als

$$F_1(s) = \frac{\omega_0}{\omega_0 + s},$$

wobei $\omega_0$ die Übergangsfrequenz darstellt.

Der Hochpass-Filter kann als DT1-Glied ausgebildet sein, welches einen Differenzierer realisiert. Aufgrund der differenzierenden Wirkung können die DT1-Glieder keine Gleichsignale übertragen. Diese Hochpasseigenschaft wird für die Ansteuerung der schneller reagierenden Handachsen verwendet. Die Übertragungsfunktion $F_2$ lautet:

$$F_2(s) = \frac{s}{\omega_0 + s},$$

wobei wo wiederum die Übergangsfrequenz darstellt. Im Rahmen einer digitalen Realisierung der Hochpass- bzw. Tiefpassfilter können die Übertragungsfunktionen bei einer Übergangsfrequenz von 3 Hz und einer Abtastzeit von 5 ms wie folgt aussehen:

$$F_1 = \frac{0{,}08994}{z - 0.9101} \quad \text{und} \quad F_2 = \frac{z - 1}{z - 0.9101}.$$

Die freie Variable z in den z-Übertragungsfunktionen ist eine komplexe Zahl, deren Bedeutung in der Fachliteratur unter dem Stichwort z-Transformationen nachgelesen werden kann. Die konkreten Zahlenwerte in den z-Übertragungsfunktionen hängen von der jeweiligen Abtastzeit ab und können daher für jeden Anwendungsfall genau angepasst werden.

Die Bode-Diagramme zu den digitalen Filtern mit den vorgenannten Zahlenwerten sind Fig. 2c zu entnehmen, in der die Amplituden- und Phasenkennlinien (Magnitude und Phase) gegen die Frequenz (Frequency) aufgetragen dargestellt sind. Die beiden Amplitudenkennlinien für den Tiefpassfilter (durchgezogen) den Hochpassfilter (gestrichelt) schneiden sich bei der Übergangsfrequenz der Frequenzweiche bei 3 Hz.

Hochpass und Tiefpass sind vorzugsweise so aufeinander abgeglichen, dass sich ihre Übertragungsfunktionen $F_1$ und $F_2$ zu Eins addieren (Abgleichbedingung).

Fig. 2b zeigt eine zu der in Fig. 2a dargestellten Zweiweg-Frequenzweiche alternative Realisierung einer Zweiweg-Frequenzweiche 7, bei der die Abgleichbedingung ausgenutzt und auf den Tiefpassfilter mit der Übertragungsfunktion $F_1$ verzichtet worden ist. Statt dessen ist nur ein Hochpassfilter mit der Übertragungsfunktion $F_2$ vorgesehen, der das Eingangssignal $S_{A,P}$ filtert. Dessen höherfrequentes Ausgangssignal $S_{A2,P2}$ wird in einem Subtrahierer 20 von dem Eingangssignal $S_{A,P}$ abgezogen, so dass nur das niederfrequente Ausgangssignal $S_{A1,P1}$ übrig bleibt und auf diese Weise eine frequenzabhängige Aufteilung der Stellgröße $S_{A,P}$ erfolgt. Analog könnte auch nur ein Tiefpass mit der Übertragungsfunktion $F_1$ verwendet und der Hochpass eingespart werden. Dieses Prinzip lässt sich auch auf eine Mehrweg-Frequenzweiche übertragen, in der wahlweise ein Hochpass, Tiefpass oder Bandpass eingespart werden kann.

Nachfolgend wird die Umsetzung der Erfindung anhand eines einfachen Roboters 10 für die Höhenführung einer Roboterhand 11 über einer Arbeitsfläche 12 beschrieben, der schematisch in Fig. 3 dargestellt ist. Dieser weist zwei Grundachsen 13 auf, welche üblicherweise zur Höhenpositionierung der Roboterhand 11 über der Arbeitsfläche 12 verwendet werden. Unmittelbar an der Roboterhand 11 ist ferner eine Handachse 14 vorgesehen.

An der Roboterhand 11 befindet sich ein Lasersensor 15, der den Abstand der Roboterhand 11 zur Arbeitsfläche 12 misst und ggf. in der Bewegungsbahn befindliche Hindernisse 16 detektiert. Bei Feststellen eines Hindernisses 16 können die Grundachsen 13 derart angepasst werden, dass die Höhe der Roboterhand 11 über dem Hindernis 16 entsprechend nachgeführt wird. Da die Grundachsen 13 jedoch eine große Last tragen und daher in ihrer Reaktionsgeschwindigkeit langsam sind, dauert es vergleichsweise lange, bis die Bewegung der Roboterhand 11 dem Hindernis 16 nachgeführt ist.

Wie Fig. 4 zu entnehmen, kann durch die Handachse 14, deren Bewegungsrichtung durch einen Doppelpfeil dargestellt ist, die Höhe der Roboterhand 11 mit dem Lasersensor 15 über dem Hindernis 16 schnell angepasst werden, indem die Roboterhand 11 entsprechend der Bewegung der Handachse 14 gedreht wird.

Dies ist im Detail noch einmal in Fig. 5 dargestellt. Durch eine Drehung um die Handachse 14 bewegt sich die Roboterhand 11 mit dem Lasersensor 15 unmittelbar nach oben und unten, so dass die Höhe zwischen der Roboterhand 11 und der Arbeitsfläche 12 bzw. dem Hindernis 16 aufgrund der sehr reaktionsschnellen Handachse 14 einfach nachgestellt werden kann.

Wie den Fig. 4 und 5 zu entnehmen, kommt es dabei aufgrund der Drehbewegung um die Handachse 14 zu einer Verschiebung des Auftreffpunktes des Laserstrahls des Lasersensors 15 auf dem Hindernis 16. Diese Orientierungsfehler bei der Anordnung des Endeffektors bzw. der Roboterhand 11 können bei vielen Anwendungen jedoch in Kauf genommen werden, bei denen der Abstand zwischen der Roboterhand 11 bzw. einem daran festgelegten Endeffektor und der Arbeitsfläche 12 entscheidend ist. Sofern zusätzlich die absolute Positionierung des Endeffektors im Bereich der Arbeitsfläche 12 wichtig ist, kann dies, wie in Fig. 4 durch einen geraden Doppelpfeil dargestellt, durch ein entsprechendes Nachfahren anderer Achsen der Bewegungseinrichtung nachgeführt werden. Bei diesen Achsen kann es sich sowohl um bspw. zusätzlich installierte Handachsen als auch um Grundachsen des Roboters 10 handeln. Eine geeignete Anordnung kann im Einzelfall jeweils entsprechend den Geschwindigkeitsanforderungen für die bestimmten Bewegungen gewählt werden. Je nach Achsentyp findet dann eine Ansteuerung mit der hochfrequenten bzw. der niederfrequenten Stellgröße $S_{A2}$ bzw. $S_{A1}$ statt.

Durch die Aufteilung der translatorischen Höhenbewegung sowohl auf die langsameren Grundachsen 13 als auch die schnelleren Handachsen 14 des Roboters 10 kann erfindungsgemäß eine besonders schnelle Nachführung des Abstandes zwischen der Roboterhand 11 und der Arbeitsfläche 12 erreicht werden, da die Handachse 14 mit einem hochfrequenten Signal $S_{A2}$ angesteuert wird und daher besonders schnelle Bewegungsänderungen nachvollziehen kann.

Ein Beispiel für eine Sensorführung ist in Fig. 6 erläutert, die den Lasersensor 15 des Roboters 10 im Detail zeigt. Der Lasersensor 15 sendet einen Laserstrahl 17 aus, der unter einem bestimmten Winkel auf die Arbeitsfläche 12 auftrifft, dort reflektiert wird und nach der Reflexion wieder im Lasersensor 15 detektiert wird. Aus dem Abstand 18 zwischen dem reflektierten Laserstrahl 17 und der Normalen 19 im Reflexionspunkt des Laserstrahls kann auf den Abstand zwischen der Arbeitsfläche 12 und dem Lasersensor 15 geschlossen werden. Neben dem in Fig. 6 näher beschriebenen Lasersensor 15 können jedoch auch andere Sensorsysteme, bspw. Ultraschallsensoren, eingesetzt werden, welche die interessierende Lage der Roboterhand 11 zu einer Arbeitsfläche 12 ermitterln können.

Bei dem in Fig. 1 dargestellten Wirkungsplan ist der Einfachheit halber ein gesteuerter Bewegungsanteil nicht berücksichtigt, welcher der dargestellten Regelung möglicher Weise überlagert ist. Bei einer überlagerten Steuerung sind die dargestellten frequenzabhängigen Signale bzw. Stellgrößen $S_{A1}$, $S_{A2}$ als Korrekturwerte zu verstehen, die auf Hauptstellgrößen $S_1$, $S_2$ für die Achssteuerungen 8, 9 aufaddiert werden. Die Heuptstellgrößen $S_1$, $S_2$ können sich bspw. aus dem gesteuerten Bewegungsanteil ergeben. Ferner kann den einzelnen Achsen ein durch numerische Differentiation zu gewinnendes Vorsteuersignal für die Drehzahl und/oder Geschwindigkeit zugeführt werden, sofern dies nicht intern gebildet wird. Eine derartige, insbesondere in die Recheneinheit 5 mit integrierte Vorsteuerung verbessert das Ansprechverhalten der Achsen und damit insgesamt die Dynamik der implementierten Steuerung und/oder Regelung.

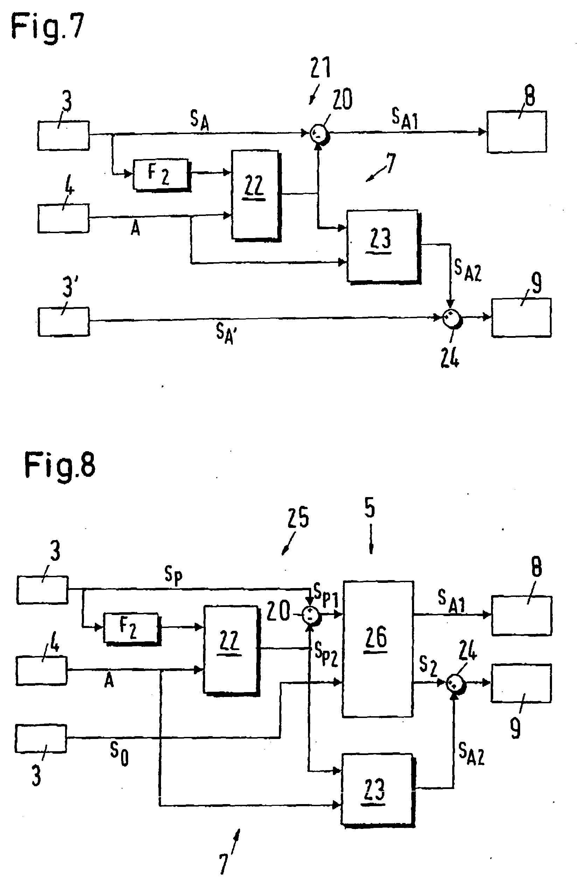

Nachfolgend werden anhand der Wirkungspläne darstellenden Fig. 7 bis 9 weitere Steuer- und Regelungskonzepte beschrieben, in denen die Erfindung umgesetzt ist, Gleiche Komponenten werden dabei mit den in Fig. 1 bezeichneten Bezugszeichen versehen.

Fig. 7 zeigt eine Steuerung 21 für gesteuerte und/oder geregelte Bewegungen einer Bewegungseinrichtung mit Grund- und Handachsen, wobei die Steuerung 21 vollständig auf der Gelenkebene der einzelnen Achsen implementiert ist.

Bei der Steuerung 21 sind ein Sollwertgeber 3 für Gelenkwinkelsollwerte der Grundachsen und ein Sollwertgeber 3' für Gelenkwinkelsollwerte der Handachsen vorgesehen, welche entsprechende Stellgrößen $S_A$ und $S_{A'}$ ausgeben. Die an die Grundachsen gerichtete Stellgröße $S_A$ wird in einer Frequenzweiche 7 in ein Signal $S_{A1}$ mit niedrigerer Frequenz für die Achssteuerung 8 der Grundachsen und in ein Signal $S_{A2}$ mit höherer Frequenz für die Achssteuerung 9 der Handachsen aufgeteilt.

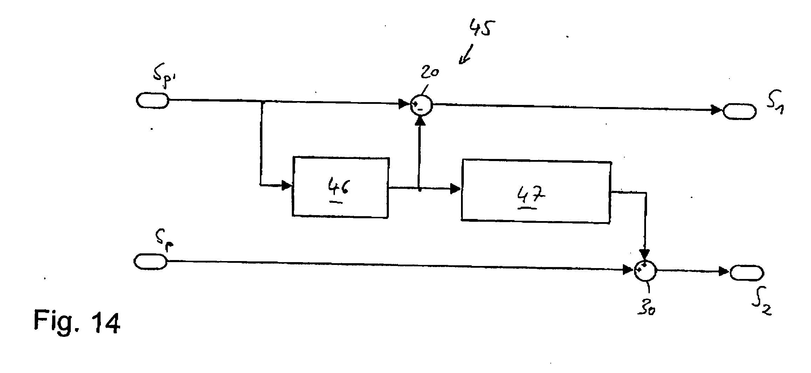

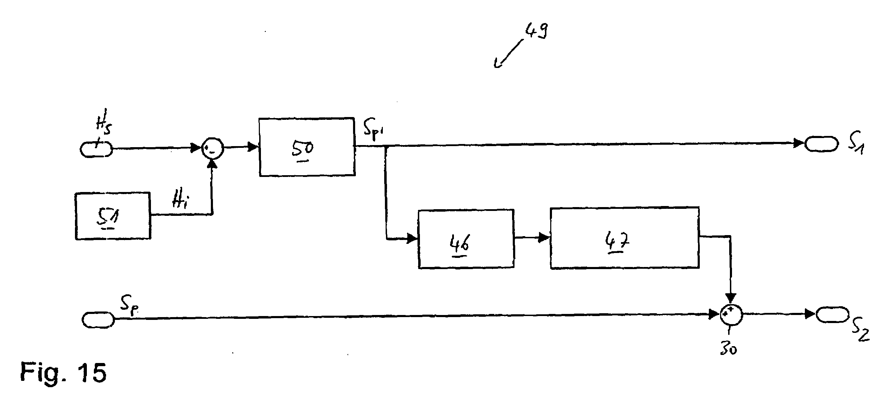

In analoger Umsetzung der Erfindung bei dieser und allen anderen beschriebenen Ausführungsformen wäre es auch möglich, die Frequenzweiche 7 bei der an die Handachsen mit höherer Reaktionsgeschwindigkeit gerichteten Stellgröße $S_{A'}$ anzuwenden. In diesem Fall würden die niederfrequenten Signale aus der Stellgröße $B_{A'}$ herausgefiltert und den Grundachsen mit niedrigerer Reaktionsgeschwindigkeit zugewiesen. Die nachfolgend beschriebene Umsetzung der Steuerung 21 wäre dabei entsprechend anzupassen. Eine solche Realisierung, bei der den flinken Achsen die langsameren Stellbewegungen herausgefiltert werden, macht vor allem bei Anwendungsfällen Sinn, bei denen die Grundachsen einen größeren Stellweg haben als die flinkeren Handachsen. Dadurch wird erreicht, dass größere Stellwege durch bspw. gleichzeitige bzw. aufeinander abgestimmte Bewegungen der Hand- und Grundachsen umgesetzt werden. Die schnell reagierenden Handachsen können dann näherungsweise in einer Mittelstellung ihres Verstellwegs gehalten werden, um bei vorzunehmenden Positions- oder Orientierungskorrekturen schnell in jede Bewegungsrichtung reagieren zu können. Dies wird auch in Bezug auf die Fig. 14 und 15 noch einmal erläutert.

Die Frequenzweiche 7 weist in der dargestellten Ausführungsform einen Hochpass mit einer Übertragungsfunktion $F_2$ auf, welche entsprechend einer vorgegebenen und einstellbaren Parametrierung einen höherfrequenten Anteil aus dem Signal $S_A$ herausfiltert. Dieser Anteil wird einer bspw. in der Recheneinheit 5 der Steuerung 21 mit integrierter Projektion 22 zugeführt. Gleichzeitig werden der Projektion 22 von einem Istwertgeber 4 die Gelenkwinkel-Istwerte A der einzelnen Achsen zugeleitet.

Durch die Projektion 22 wird überprüft, ob die herausgefilterten, höherfrequenten Anteile der Stellgröße $S_A$ durch die Handachsen ausgeführt werden können. Insbesondere wenn nicht alle drei translatorischen Freiheitsgrade durch die Handachsen bedient werden können, filtert die Projektion 22 diejenigen translatorischen Bewegungsanteile heraus, die in der jeweiligen Arm- bzw. Achsstellung der Bewegungseinrichtung durch die schneller reagierenden Handachsen ausgeführt werden können. Dazu kennt die Projektion 22 auch die momentanen Gelenkwinkel-Istwerte A. Die Projektion 22 kann wahlweise auch so entworfen werden, dass aus den Bewegungsanteilen, die prinzipiell durch die Handachsen realisiert werden können, nur bestimmte vom Anwender vorgebbare Richtungs- bzw. Bewegungsanteile herausgefiltert werden.

Daher stellt die Projektion 22 eine erfindungsgemäß einfache Möglichkeit dar, gewisse Anteile einer Stellgröße S dahingehend zu überprüfen, ob diese durch eine bestimmte Gruppe von Achsen ausgeführt werden können und/oder sollen. Anteile der Stellgröße S, die aufgrund dieser Projektion 22 nicht ausgeführt werden sollen, werden durch die Projektion 22 einfacher Weise verworfen.

Das Ausgangssignal der Projektion 22 stellt also die Bewegungsanteile dar, die auf die Handachsen umgeleitet werden sollen. Sie werden mittels einer differentiellen Transformation 23 (Jacobi-Matrix) auf die Handachsen umgerechnet. Das als Korrektursignal ausgegebene Signal $S_{A2}$ (Stellgröße) wird in einem Addierer 24 der ursprünglichen Stellgröße $S_A$, für die Achsteuerung 9 der Handachsen additiv überlagert.

Entsprechend wird das Ausgangssignal der Projektion 22, welches den durch die Handachsen umsetzbaren Anteil der eigentlich für die Grundachsen bestimmten Stellgröße $S_A$ enthält, in einem Subtrahierer 20 der Stellgröße $S_A$, d.h. dem Eingangssignal, subtraktiv überlagert. Das verbleibende Signal $S_{A1}$ stellt den niederfrequenten Anteil der Stellgröße $S_A$ dar, welcher der Achssteuerung 8 der Grundachsen zugeführt wird.

Die Projektion 22 und die differentielle Transformation 23 werden in an sich bekannter Weise jeweils durch Multiplikation mit einer Matrix realisiert, so dass auf eine genaue Beschreibung der Matrizen verzichtet werden kann. Diese Matrizen ändern sich in Anhängigkeit von den Gelenkwinkelstellungen und müssen daher von Zeit zu Zeit aktualisiert werden. Da die Änderungsgeschwindigkeit jedoch gering ist, brauchen diese Aktualisierungen nicht in jedem Steuerungstakt durchgeführt zu werden. Die entsprechenden Berechnungen können bspw. in einem Softwareprozess erfolgen, der in der Recheneinheit 5 der Steuerung mit niedriger Priorität im Hintergrund ausgeführt wird.

Bei dem in Fig. 7 dargestellten Wirkungsplan der Steuerung 21 wird in dem für die Gelenkebene relevanten, typischer Weise sehr schnellen Steuerungstakt gearbeitet. Entsprechend klein ist die in der Steuerung 21 durch die Implementierung der Erfindung zusätzlich hervorgerufene Totzeit. Diese Implementierungsvariante ist sowohl für gesteuerte als auch für geregelte Bewegungen sehr gut geeignet.

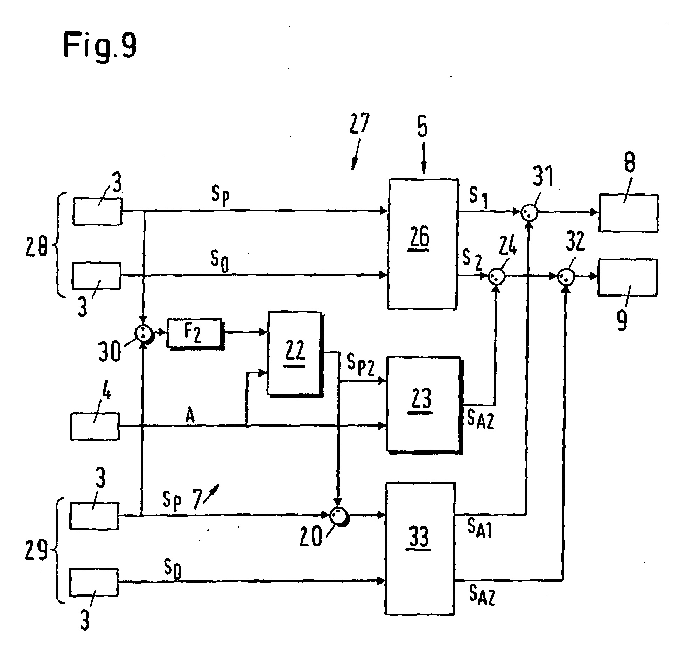

Die erfindungsgemäß benötigten Steuerungskomponenten sind in Fig. 7 durch die schattiert dargestellten Komponenten dargestellt, die Teil der Frequenzweiche 7 sind. Entsprechendes gilt für die Fig. 8 und 9. Die Frequenzweiche 7 weist den Hochpass mit der Übertragungsfunktion $F_2$ und den Subtrahierer 20 sowie den Addierer 24 auf, durch welche die Stellgröße $S_A$ in frequenzabhängige Signale $S_{A1}$ und $S_{A2}$ aufteilt und in eine herkömmliche Steuerung eingebunden wird. Teil der Frequenzweiche 7 sind auch die Projektion 22 und die differentielle Transformation 23, welche bspw. als Software in die Recheneinheit 5 der Steuerung 21 mit integriert sein können. Daher kann das erfindungsgemäße Verfahren sowohl als komplette Steuerung als auch als Steuerungskomponente realisiert werden, welche in eine herkömmliche Steuerung integriert wird. Beides lässt sich sowohl durch Software in Form eines Computerprogrammprodukts, das in die Rechnereinheit einer Steuerung geladen wird, als auch in Form einer Hardware-Steuerung realisieren. Dies gilt auch für die nachfolgend beschriebenen Steuerungsvarianten.

Der in Fig. 8 dargestellte Wirkungsplan einer Steuerung 25 zeigt eine Implementierung der Erfindung, bei der ein hochfrequenter Anteil einer Stellgröße für die Position $S_P$ (korrespondierend zu einem Positionssollwert) von den Grundachsen auf die Handachsen einer Bewegungseinrichtung umgelenkt wird. Als Bewegungsvorgaben der Steuerung 25 dienen eine Stellgröße $S_P$ für die Position der Bewegungseinrichtung, weiche herkömmlicher Weise den Grundachsen zugeordnet ist, und eine Stellgröße für die Orientierung $S_O$ der Bewegungseinrichtung, welche herkömmlicher Weise die Orientierung eines Endeffektors durch Versteifung der Handachsen einstellt. Die Steiigrößen $S_P$ und $S_O$ werden durch die Sollwertgeber 3 erzeugt. Die Stellgröße Sp kann als vektorieller Positionssollwert (bspw. Komponenten: x, y, z) und die Stellgröße $S_O$ als dreidimensionale Orientierungsvorgabe (bspw. bestehend aus drei Euler-Winkeln) vorgegeben werden. Die Bewegungsvorgaben können rein gesteuert sein oder ganz oder teilweise auf einer Sensorrückführung (Regelung) beruhen.

Bei der Steuerung werden die Sollwerte Sp und $S_O$ grundsätzlich der Recheneinheit 5 der Steuerung 25 zugeführt, welche eine inverse kinematische Transformation 26 durchführt, um aus den Sollwerten Sp für die Position und $S_O$ für die Orientierung die Sollwerte für die Achskoordinaten zu erzeugen, welche den Achssteuerungen 8, 9 für die Grundachsen und die Hauptachsen zugeführt werden. Die inverse kinematische Transformation 26 arbeitet mit Absolutwerten und wird bei vielen Steuerungen mit einer relativ langen Zykluszeit ausgeführt.

In dieses Steuerungskonzept ist nun die erfindungsgemäße Frequenzweiche 7 als zusätzliche Steuerungskomponente integriert. Diese weist ähnlich wie bei der Steuerung 21 gemäß Fig. 7 einen Hochpass mit der Übertragungsfunktion $F_2$ auf, welche die Stellgröße $S_P$ des Positionssollwerts filtert. Die gefilterte Stellgröße $S_P$ wird ebenso einer Projektion 22 zugeleitet, welche auch die Gelenkwinkel-Istwerte A von dem Istwertgeber 4 erhält und diejenigen Bewegungsanteile herausfiltert, die durch die Handachsen realisiert werden sollen oder können.

Das Ausgangssignal der Projektion $S_{P2}$ stellt also die Stellgröße für die Position mit dem höherfrequenten Anteil der Stellgröße $S_P$ dar, der durch die Handachsen ausgeführt wird. Der verbleibende niederfrequente Anteil der Stellgröße $S_P$ wird dann durch den Subtrahierer 20 gebildet, welcher das der inversen kinematischen Transformation 26 zugeführte Signal $S_{P1}$ bildet. Der Signalanteil $S_{P2}$ wird der differentiellen Transformation 23 zugeleitet, welche auch die Gleitwinkel-Istwerte A des Istwertgebers 4 erhält, um daraus die Stellgröße $S_{A2}$ mit dem höherfrequenten Signalteil zu erzeugen, welcher der Achssteuerung 9 für die Handachsen zugeführt wird.

Dazu ist zwischen dem Ausgang der inversen kinematischen Transformation 26 für die Hauptstellgröße $S_2$, welche die Handachsen ansteuert, und dem Eingang der Achssteuerung 9 ein Addierer 24 ausgebildet, welche die Hauptstellgröße $S_2$ und die als Korrekturwert zu der Hauptstellgröße ausgebildete Stellgröße $S_{A2}$ addiert und als Summensignal der Achssteuerung 9 zuführt.

In Fig. 9 ist ein weitere Ausführungsform der Erfindung in Form eines Wirkungsplans einer Steuerung 27 dargestellt, welche eine kombinierte Steuerung und Regelung darstellt. Sowohl der gesteuerte Anteil 28 als auch der geregelte Anteil 29 stellen mittels Sollwertgebern 3 jeweils Stellgrößen $S_P$ und $S_O$ für die Position und die Orientierung zur Verfügung. Die Stellgrößen $S_P$ und $S_O$ des gesteuerten Anteils 28 werden der zuvor bereits beschriebenen inversen kinematischen Transformation 26 zugeleitet, welche daraus die Hauptstellgrößen $S_1$ und $S_2$ für die Ansteuerung der Grundachsen und der Hauptachsen ableitet.

Die Stellgrößen $S_P$ des gesteuerten Anteils 28 und des geregelten Anteils 29 werden in einem Addierer 30 addiert und dem Hochpass mit der Übertragungsfunktion $F_2$ einer Frequenzweiche 7 zugeführt, welche nur den hochfrequenten Anteil der summierten Stellgrößen $S_P$ ausgibt und einer Projektion 22 zuführt, welche wie in Bezug auf Fig. 7 und 8 bereits beschrieben an einen Istwertgeber 4 zur Erfassung des Gelenkwinkel-Istwertes A angeschlossen ist. Das Ausgangssignal der Projektion $S_{P2}$ stellt den Anteil der Stellgröße $S_P$ dar, der von den Grundachsen auf die Handachsen verlagert werden soll. Dieser wird in beschriebener Weise einer differentiellen Transformation 23 zugeführt, welche daraus die höherfrequente Stellgröße $S_{A2}$ für die Achskoordinaten bestimmt. Die Stellgröße $S_{A2}$ wird in dem Addierer 24 zu der Hauptstellgröße $S_2$ der inversen kinematischen Transformation 26 hinzuaddiert.

Ferner wird das höher frequente Signal $S_{P2}$ der Frequenzweiche 7 von der Stellgröße $S_P$ des geregelten Anteils 29 der Steuerung 27 mittels eines Subtrahierers 20 abgezogen, so dass davon nur der niederfrequente Signal $S_{P1}$ übrig bleibt. Dieses wird zusammen mit der Stellgröße $S_O$ des geregelten Anteils 29 einer differentiellen inversen kinematischen Transformation 33 zugeführt, welche die dazugehörigen Stellgrößen für die Achskoordinaten als Korrektürwerte zu den Hauptstellgrößen $S_1$ und $S_2$ bestimmt. Diese werden durch die Addierer 31 und 32 den Hauptstellgrößen $S_1$ und $S_2$ hinzuaddiert und den entsprechenden Achssteuerungen 8, 9 zugeführt.

Die Stellgrößen $S_P$ und $S_O$ des geregelten Anteils 29 der Steuerung 27 werden, im Gegensatz zu denen des gesteuerten Anteils 28, in einer differentiellen inversen kinematischen Transformation 33 in Stellgrößen für die Achskoordinaten umgerechnet, welche wesentlich schneller ist, als die für den gesteuerten Anteil verwendete nicht-differentielle inverse kinematische Transformation 26. Für die Steuerung ist die relativ lange Zykluszeit der nicht-differentiellen Transformation unkritisch.

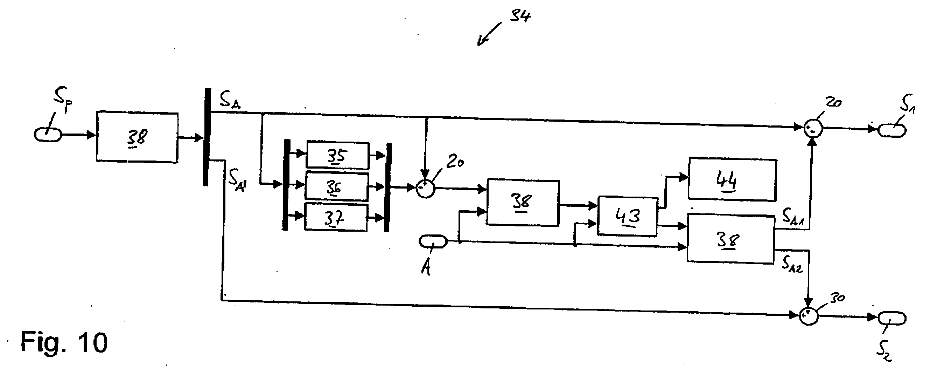

Fig. 10 stellt den Ablauf einer weiteren, erfindungsgemäßen Steuerung 34 einer Bewegungseinrichtung dar. Ausgangspunkt des ablaufenden Verfahrens ist eine als Bewegungsvorgabe dienende Stellgröße $S_P$ für eine vorgegebene Position der Bewegungseinrichtung. Diese wird mittels einer Koordinatentransformation 38 in einer Recheneinheit der Steuerung 34 wie allgemein üblich in stellgrößen für die Achsen $S_A$ und $S_{A'}$ umgerechnet, wobei die Stellgrößen $S_A$ jeweils trägen Achsen mit langsamerer Reaktionsgeschwindigkeit und die Stellgrößen $S_{A'}$ jeweils flinken Achsen mit höherer Reaktionsgeschwindigkeit zugeordnet werden. Dabei sind die Stellgrößen $S_A$ und $S_{A'}$, von denen jeweils eine für jede anzusteuernde Achse vorliegt, der Übersichtlichkeit als jeweils ein Wert dargestellt.

Die Stellgrößen $S_A$ werden einer aus dynamischen Filtern 35, 36, 37 aufgebauten Filtereinheit zugeführt, wobei jeweils ein dynamischer Filter 35, 36, 37 genau einer trägen Achse zugeordnet und auf diese optimal abgestimmt ist. Daher kann jeder der Filter 35, 36, 37 in der Praxis verschieden aufgebaut sein. Ein Filter 35, 36, 37 kann entsprechend den zuvor beschriebenen Ausführungsformen bspw. ein Tiefpassverhalten aufweisen, um hochfrequente Anteüe in der Stellgröße $S_A$ herauszufiltern. Zusätzlich zu oder anstelle der frequenzabhängigen Filterung der eingehenden Bewegungsvorgaben (Stellgröße $S_A$) können die dynamischen Filter 35, 36, 37 in Abhängigkeit der dynamischen Eigenschaften der ihnen zugeordneten Achsen auch die nachfolgend beschrieben Filtercharakteristika aufweisen.

Die Filter 35, 36, 37 können den Geschwindigkeitsanstieg in den Bewegungsvorgaben begrenzen. Dies führt dazu, dass die Achse nur mit einer begrenzten Beschleunigung bewegt wird. Ferner kann der Filter 35, 36, 37 einen Beschleunigungsanstieg in den Bewegungsvorgaben begrenzen, um den Ruck in der Bewegung der Achse zu limitieren. Die Anstiegsbegrenzung von Geschwindigkeit und Beschleunigung kann in einem Filter 35, 36, 37 auch kombiniert werden, um sowohl die Beschleunigung als auch den Ruck in der Bewegung einer Achse zu begrenzen.

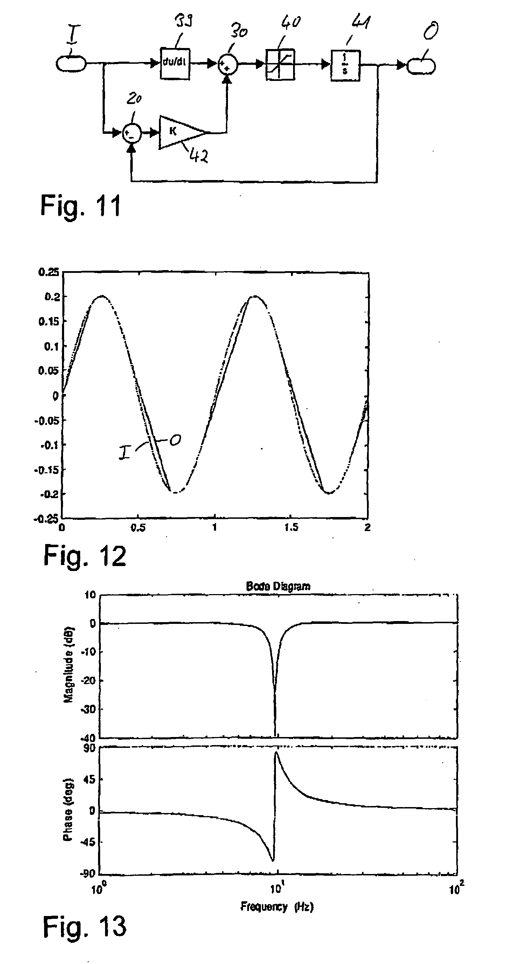

Ein Beispiel für einen Filter 35, 36, 37 zur Anstiegsbegrenzung ist in Fig. 11 dargestellt. Dort wird ein Eingangssignal I aufgeteilt und zum einen einem Derivationsglied 39 zur Bildung einer zeitlichen Ableitung des Eingangssignals I zugeführt. Das differenzierte Signal wird dann über ein Saturationsglied 40 und ein Integrationsglied 41 dem Ausgang des Filters 35, 36, 37 als Ausgangssignal O zugeführt.

Zum anderen wird das Eingangssignal I einem Subtrahierer 20 zugeführt, in dem das Ausgangssignal O von dem Eingangssignal I abgezogen wird. Das in dem Subtrahierer 20 gebildete Differenzsignal wird in einem Rückführverstärker 42 verstärkt und in einem Addierer 30 zu dem zeitlich differenzierten Eingangssignal I hinzuaddiert, bevor dieses zum Ausgangssignal weiterverarbeitet wird. Dabei ist die Rückführverstärkung K möglichst hoch zu wählen, damit ein gutes Folgeverhalten erzielt wird, wenn die Begrenzung nicht aktiv ist. In Fig. 12 ist das Übertragungsvorhalten des Filters 35, 36, 37 zur Anstiegsbegrenzung in beliebigen Einheiten durch Gegenüberstellen des Eingangssignals I und des Ausgangssignals O dargestellt. Dem Diagramm ist zu entnehmen, dass das Ausgangssignal O im Bereich eines starken Anstiegs des Eingangssignals I abgeflacht wird.

Neben oder anstelle der zuvor beschriebenen Filterung zur Begrenzung des Anstiegs und der Beschleunigung der Bewegungsvorgaben, kann in einem Filter 35, 36, 37 auch eine Unterdrückung spezieller Frequenzen, insbesondere mechanischer Resonanzfrequenzen der jeweiligen Achse, erfolgen. Dies kann mit Hilfe eines sog. "Notch-Filters" realisiert werden, dessen Bode Diagramm beispielhaft in Fig. 13 dargestellt ist.

Nach der Filterung der Stellgrößen $S_A$ in den Filtern 35, 36, 37 wird das gefilterte Signal von der Stellgröße $S_A$ in einem Subtrahierer 20 abzogen und anschließend das verbleibende Differenzsignal in Kenntnis der aktuellen Achslage A der beteiligten Achsen mittels einer kinematischen Transformation 38 von Achskoordinaten in kartesische Koordinaten umgerechnet. Das wie beschrieben transformierte Differenzsignal der Stellgröße $S_A$ wird in einem nachfolgenden, eine Projektion durchführenden Funktionsblock 43 in der zuvor beschriebenen Weise - wiederum in Kenntnis der aktuellen Achslage A der beteiligten Achsen - auf den durch die flinken Achsen vorgegebenen Bewegungsraum projiziert. In einer anschließenden, weiteren Koordinatentransformation 38 werden - wiederum in Kenntnis der aktuellen Achslage A der beteiligten Achsen - die nach der Projektion verbleibenden Signalanteile der Bewegungsvorgabe wieder in Achskoordinaten umgerechnet und als dynamisch aufgeteilte Stellgröße $S_{A2}$ per additiver Korrektur in dem Addierer 30 den Stellgrößen $S_{A'}$ für die flinken Achsen zugewiesen.

Die Anteile der Bewegungsvorgabe $S_{A'}$ die wie zuvor beschrieben durch die dynamische Filterung in den Filtern 35, 36, 37, Projektion 43 und Transformation 38 von den trägen auf die flinken Achsen übertragen wurden, müssen aus der Bewegungsvorgabe $S_A$ für die trägen Achsen herausgenommen werden, um nicht doppelt zur Ausführung zu gelangen. Dies geschieht durch Subtraktion der dynamisch aufgeteilten und geeignet transformierten Stellgröße $S_{A1}$ von der Bewegungsvorgabe $S_A$ für die trägen Achsen in dem Subtrahierer 20.

Die Ausgangsstellgrößen werden dann durch die Hauptstellgrößen $S_1$ für die trägen Achsen und $S_2$ für

flinken Achsen gebildet und unmittelbar zum Verstellen der Achsen genutzt.

Mit der erfindungsgemäßen Aufteilung der Stellgröße $S_A$ für träge Achsen in die den trägen Achsen und den flinken Achsen zugewiesenen Stellgrößen $S_{A1}$ und $S_{A2}$, welche abhängig von den dynamischen Achseigenschaften der beteiligten Achsen erfolgt, kann neben einer rein frequenzmäßigen Aufteilung auch eine adaptiv an die jeweilige kinematische Situation des Gesamtsystems angepasste Aufteilung der Bewegungsvorgaben vorgenommen werden. Die Adaption an das Gesamtsystem kann bspw. erfolgen, indem gemäß an sich bereits bekannter Methoden für jede Achse das effektive Lastträgheitsmoment in Abhängigkeit von der Gelenkstellung und den von der Bewegungseinrichtung mitgeführten Last- bzw. Nutzlasten berechnet wird. Bei Kenntnis der Elastizitäten, die insbesondere in den Achsgetrieben lokalisiert sind, können damit die mechanischen Eigenfrequenzen der einzelnen Achsen berechnet und die Sollwertsignale für die Bewegungsvorgabe durch adaptive Tiefpassfilterung und/oder sonstige dynamische Filterungen entsprechend angepasst werden.

Gemäß einem weiteren Aspekt der Erfindung ist in der Steuerung 34 eine Visualisierung 44 vorgesehen, in der bspw. die Bewegungsrichtungen auf einem Bildschirm dargestellt werden, die durch die Gruppen der flinken Achsen 14 bedient werden können. In der Visualisierung 44 werden auch eventuell zugestandene Kompromisse bezüglich der Umsetzung der Bewegungsvorgaben dargestellt, so dass es dem Operator einer Anlage möglich ist, durch Parameteränderung des Systems einzugreifen und höhere oder niedrige Genauigkeitsanforderungen einzustellen. Zugunsten einer schellen Positionierung werden insbesondere kleine temporäre Orientierungsabweichungen des Endeffektors häufig toleriert.

Die Visualisierung 44 der Bewegungsrichtungen unterstützt den Operator auch bei der Programmierung. Als weitere Programmierunterstützung kann vorgesehen werden, dass eine aktuelle Gelenkstellung der Achsen 13, 14 der Bewegungseinrichtung automatisch ermittelt wird, so dass sich unter Verwendung des vorbeschriebenen Verfahrens bzw. der entsprechenden Steuerung für vorgegebene Vorzugsrichtungen eine besonders gute Bewegungsdynamik ergibt.

Fig. 14 zeigt eine Steuerung 45 mit einer vereinfachten Umsetzung des erfindungsgemäßen Konzepts gemäß einer sechsten Ausführungsform, die eine Projektion wie zuvor beschrieben nicht vorsieht. Allerdings kann die Projektion auch bei dieser Ausführunrisform in vergleichbarer Weise integriert werden.

Die Steuerung 45 sieht eine Steuerung für eine Bewegungseinrichtung mit typischer Weise sechs Achsen vor, die über Bewegungsvorgaben bzw. Stellgrößen $S_P$ angesteuert werden. Die Bewegungseinrichtung weist eine weitere Achse mit nur einem eingeschränkten Verstellbereich auf, die eine hohe Reaktionsgeschwindigkeit hat und über eine Stellgröße $S_{P'}$ gesteuert wird.

Diese Stellgröße $S_{P'}$ wird einem Filter 46 mit einer Funktion zur Tiefpassfilterung zugeführt, welcher der Stellgröße $S_{P'}$ die langsameren Stellanteile herausfiltert.

Ein solcher Anwendungsfall kann sich bei einer Achskonstellation ergeben, bei der zusätzlich zu einer Höhenverstellung mit einer trägen Grundachse, die einen großen Verstellweg hat, eine weitere Höhenverstellung mit einer Handachse erfolgen kann, die jedoch nur einen kleinen Verstellweg und daher eine hohe Reaktionsgeschwindigkeit aufweist. Dann ist es vorteilhaft, die Handachse zur Höhenverstellung in einer mittleren Position zu halten, damit mögliche Höhenkorrekturen in beide Verstellrichtungen mit etwa gleichem Verstellweg und hoher Reaktionsgeschwindigkeit erfolgen können. Daher ist es sinnvoll, die Handachse zur Höhenverstellung möglichst wenig zu verwenden. Dies kann durch Herausfiltern der langsamen Anteile der Stellgröße $S_{P'}$ erfolgen.

In einem Subtrahierer 20 werden diese herausgefilteren Anteile von der Stellgröße $S_{P'}$ abgezogen und in einer Transformation 47 den übrigen Achsen zugewiesen. Diese herausgefilterten und auf Stellbewegungen für die übrigen Achsen transformierten Anteile der Stellgröße $S_{P'}$ werden entsprechend in einem Addierer 30 den Stellgrößen $S_P$ hinzugefügt. Die Achsen werden dann mit den dynamisch bzw. frequenzabhängig korrigierten Stellgrößen $S_1$, $S_2$ angesteuert.

In Fig. 15 ist die Steuerung 45 durch eine Steuerung 49 ersetzt, die eine Sensorführung der zusätzlichen Achse zur Höhenführung vorsieht. In diesem Fall wird einem Regler 50 zur Höhenführung die Differenz eines Höhensollwerts $H_s$ und eines mittels eines Sensors 51 bestimmten Höhenistwerts $H_I$ zugeführt, der daraus die Bewegungsvorgabe der Stellgröße $S_{P'}$ bestimmt. Die Bewegung der übrigen Achsen ist durch die Stellgrößen $S_P$ vorgegeben.

Zur dynamischen Aufteilung der Bewegungsvorgaben wird die Stellgröße $S_{P'}$ in zu der gemäß Fig. 14 beschriebenen Ausführungsform analoger Weise einem Filter 46 zur Tiefpassfilterung und einer Transformation 48 zugeführt, welche die herausgefilterte Bewegung der weiteren Achse auf die anderen Achsen überträgt und der Stellgröße $S_P$ hinzuaddiert.

Auf eine Korrektur der Bewegungsvorgabe für die weitere Achse kann verzichtet werden, da sich die Korrektur aufgrund der Sensorführung automatisch ergibt. Daher stimmt die Stellgröße $S_1$ mit der Stellgröße $S_{P'}$ überein.

Die gemäß Fig. 14 und 15 beschriebenen Ausführungsformen sind jedoch nicht auf eine Höhenführung beschränkt. Die Idee der zur Hochpassfilterung dualen Tiefpassfilterung ist grundsätzlich für beliebige Achskombinationen einsetzbar und kann dann mit einer Projektion kombiniert werden.

Das erfindungsgemäße Konzept ist sowohl für rein gesteuerte Bewegungen als auch solche geeignet, die durch Rückführung von externen, prozessseitigen Sensorinformationen ganz oder teilweise geregelt sind und sich daher automatisch an bestimmte Umgebungsbedingungen anpassen. Insbesondere kann das Konzept als vollständige Steuerung oder als Steuerungskomponente vorgesehen werden, die eine vorhandene Steuerung ergänzt und das Bewegungsverhalten der gesteuerten Bewegungseinrichtung beschleunigt. Mit dem beschriebenen Vorgehen kann eine Reaktion in Echtzeit erfolgen, so dass der Einsatz der Erfindung auch in einem geschlossenen Regelkreis möglich ist.

**Bezugszeichenliste:**

| | |
|---|---|
| 1 | Steuerung |
| 2 | Regler, Positionsregler |
| 3, 3' | Sollwertgeber |
| 4 | Istwertgeber |
| 5 | Recheneinheit |
| 6 | Lageistwertgeber |
| 7 | Frequenzweiche, Hoch- und Tiefpassfilter |
| 8 | Achssteuerung |
| 9 | Achssteuerung |
| 10 | Bewegungseinrichtung, Roboter |
| 11 | Roboterhand |
| 12 | Arbeitsfläche |
| 13 | Grundachse |
| 14 | Handachse |
| 15 | Lasersensor |
| 16 | Hindernis |
| 17 | Laserstrahl |
| 18 | Abstand |
| 19 | Normale |
| 20 | Subtrahierer |
| 21 | Steuerung |
| 22 | Projektion |
| 23 | differentielle Transformation |
| 24 | Addierer |
| 25 | Steuerung |
| 26 | inverse kinematische Transformation |
| 27 | Steuerung |
| 28 | gesteuerter Anteil |
| 29 | geregelter Anteil |
| 30 | Addierer |
| 31 | Addierer |
| 32 | Addierer |
| 33 | differentielle inverse kinematische Transformation |
| 34 | Steuerung |
| 35 | dynamischer Filter |
| 36 | dynamischer Filter |
| 37 | dynamischer Filter |
| 38 | Koordinatentransformation / kinematische Transformation |
| 39 | Derivationsglied |
| 40 | Saturationsglied |
| 41 | Integrationsglied |
| 42 | Rückfohrverstärker |
| 43 | Projektion |

| 44 | Visualisierung |
| 45 | Steuerung |
| 46 | Filter |
| 47 | Transformation |
| 49 | Steuerung |
| 50 | Regler |
| 51 | Sensor |

| $S_H$ | Stellgröße für die Höhe |
| $S_O$ | Stellgröße für die Orientierung |
| $S_A$ | Stellgröße für die Achskoordinaten |
| $S_{A1,A2}$ | frequenzabhängige bzw. dynamisch aufteilte Stellgrößen |
| $S_P$ | Stellgröße für die Position |
| $S_{P1,P2}$ | frequenzabhängige bzw. dynamisch aufteilte Stellgrößen |
| $S_{1,2}$ | Hauptstellgrößen |
| Hs | Höhensollwert |
| $H_I$ | Höhenistwert |
| A | Achslage |
| I | Eingangssignal |
| O | Ausgangssignal |
| K | Rückführverstärkung |

**Patentansprüche**

1. Verfahren zur Beeinflussung der Steuerung (1, 21, 25, 27, 34, 45, 49) und/oder zur Steuerung einer Bewegungseinrichtung (10) mit mindestens einer ersten Achse (13) und mindestens einer zweiten Achse (14), welche eine höhere Reaktionsgeschwindigkeit aufweist als die erste Achse (13), bei dem mindestens eine Stellgröße ($S_A$, $S_P$) der Steuerung (1, 21, 25, 27, 34, 45, 49) zur Ansteuerung der Achsen (13, 14) der Bewegungseinrichtung (10) erfasst wird, wobei die von der Steuerung (1, 21, 25, 27, 34, 45, 49) ausgegebene Stellgröße ($S_A$, $S_P$) frequenzabhängig und/oder in Abhängigkeit dynamischer Eigenschaften der Achsen (13, 14), insbesondere in Abhängigkeit des Beschleunigungsvermögens, des mechanischen Schwingungsverhaltens, der Position der Achsen (13, 14) und/oder den Betriebsbedingungen der Bewegungseinrichtung (10), in mindestens zwei Signale ($S_{A1}$, $S_{A2}$, $S_{P1}$, $S_{P2}$) aufgeteilt wird, welche zur Ansteuerung verschiedener Achsen (13, 14) verwendet werden, **dadurch gekennzeichnet, dass** bei der Aufteilung der Stellgröße ($S_A$, $S_P$) mittels einer Projektion (22, 43) in einer kinematisch überbestimmten Situation überprüft wird, welche Bewegungsanteile der Stellgröße ($S_A$, $S_P$) durch welche Achsen (13, 14) bzw. Gruppen von Achsen (13, 14) ausführbar sind, und dass die frequenzabhängigen und/oder in Abhängigkeit dynamischer Eigenschaften der Achsen (13, 14) aufgeteilten Signale ($S_{P1}$, $S_{P2}$, $S_{A1}$, $S_{A2}$) Korrekturwerte zu einer Hauptstellgröße ($S_1$, $S_2$) sind.

2. Verfahren nach Anspruch 1, **dadurch gekennzeichnet, dass** das Signal ($S_{P1}$, $S_{A1}$) mit dem niederfrequenten Signalanteil der ersten Achse (13) oder einer ersten Gruppe von mehreren Achsen (13) und das Signal ($S_{P2}$ $S_{A2}$) mit dem hochfrequenten Anteil der zweiten Achse (14) oder einer zweiten Gruppe von mehreren Achsen (14) zugeordnet wird, wobei die Achsen (13) der ersten Gruppe eine niedrigere Reaktionsgeschwindigkeit aufweisen als die Achsen (14) der zweite Gruppe.

3. Verfahren nach Anspruch 1 oder 2, **dadurch gekennzeichnet, dass** die Stellgröße ($S_A$, $S_P$) in mehr als zwei Signale mit verschiedenen Frequenzbereichen aufgeteilt wird.

4. Verfahren nach einem der vorhergehenden Ansprüche, **dadurch gekennzeichnet, dass** die Stellgröße ($S_A$, $S_P$) mittels Hoch- und/oder Tiefpassfilter (7, 46) in Signale ($S_{A1}$, $S_{A2}$, $S_{P1}$, $S_{P2}$) mit verschiedenen Frequenzbereichen aufgeteilt wird.

5. Verfahren nach einem der vorhergehenden Ansprüche, **dadurch gekennzeichnet, dass** insbesondere den Achsen (13) bzw. Gruppen von Achsen (13) mit niedrigerer Reaktionsgeschwindigkeit jeweils ein eigener dynamischer Filter (35, 36, 37) zugeordnet ist.

6. Verfahren nach Anspruch 5, **dadurch gekennzeichnet, dass** der dynamische Filter (35, 36, 37) eine Anstiegsbegrenzung der Geschwindigkeit und/ oder der Beschleunigung der Bewegungsvorgaben und/oder Unterdrückung spezieller Frequenzen der Bewegungsvorgaben vornimmt.

7. Verfahren nach einem der vorhergehenden Ansprüche, **dadurch gekennzeichnet, dass** die Bewegung der Bewegungseinrichtung (10) aufgrund von Sensorinformationen geregelt wird.

8. Verfahren nach einem der vorhergehenden Ansprüche, **dadurch gekennzeichnet, dass** in die Steuerung (1, 21, 25, 27) eine Vorsteuerung integriert ist.

9. Steuerungskomponente für die Steuerung (1, 21, 25, 27, 34, 45, 49) einer Bewegungseinrichtung (10) mit mindestens einer ersten Achse (13) und mindestens einer zweiten Achse (14), welche eine höhere Reaktionsgeschwindigkeit aufweist als die erste Achse (13), zur Verarbeitung einer von der Steuerung (1, 21, 25, 27) ausgegebenen Stellgröße ($S_A$, $S_P$) zur Ansteuerung der Achsen (13, 14) der Bewegungseinrichtung (10), wobei die Steuerungskomponente eine Frequenzweiche (7) zur frequenzabhängigen Aufteilung der Stellgröße ($S_A$, $S_P$) und/oder den Achsen (13, 14) zugeordnete dynamische Filter (35, 36, 37) zur Aufteilung der Stellgrößen ($S_A$, $S_P$) in Anhängigkeit von dynamischen Eigenschaften der Achsen (13, 14) in mindestens zwei Signale ($S_{A1}$, $S_{A2}$, $S_{P1}$, $S_{P2}$) aufweist, **dadurch gekennzeichnet, dass** in die Steuerungskomponente, insbesondere in die Frequenzweiche (7) und/oder die Filter (35, 36, 37), ein Projektionsblock (22, 43) zum Aufteilen der Bewegungsanteile auf die entsprechenden Achsen (13, 14) integriert ist, wobei durch den Projektionsblock bei der Aufteilung der Stellgröße ($S_A$, $S_P$) mittels der Projektion (22, 43) in einer kinematisch überbestimmten Situation überprüfbar ist, welche Bewegungsanteile der Stellgröße ($S_A$, $S_P$) durch welche Achsen (13, 14) bzw. Gruppen von Achsen (13, 14) ausführbar sind, und die Aufteilung der Stellgröße ($S_A$, $S_P$) derart durchführbar ist, dass die frequenzabhängigen und/oder in Abhängigkeit dynamischer Eigenschaften der Achsen (13, 14) aufzuteilenden Signale ($S_{P1}$, $S_{P2}$, $S_{A1}$, $S_{A2}$) Korrekturwerte zu einer Hauptstellgröße ($S_1$, $S_2$) sind.

10. Steuerungskomponente nach Anspruch 9, **dadurch gekennzeichnet, dass** die Frequenzweiche (7) als digitaler Hoch- und/oder Tiefpassfilter ausgebildet ist.

11. Steuerungskomponente nach Anspruch 9 oder 10, **dadurch gekennzeichnet, dass** ein dynamischer Filter (35, 36, 37) ein Filter zur Begrenzung des Beschleunigungs- und/oder Geschwindigkeitsanstiegs der Bewegungsvorgaben und/oder ein Filter zur Unterdrückung spezieller Frequenzen ist.

12. Steuerungskomponente nach einem der Ansprüche 9 bis 11, **dadurch gekennzeichnet, dass** in die Steuerungskomponente eine Recheneinheit (5) zur Durchführung einer differentiellen oder absoluten Transformation (23, 43) zur Erzeugung einer Stellgröße ($S_{A1}$, $S_{A2}$) für die Achskoordinaten integriert ist.

13. Steuerungskomponente nach einem der Ansprüche 9 bis 12, **dadurch gekennzeichnet, dass** die Steuerungskomponente als Computerprogrammprodukt aufgebaut ist.

14. Steuerung für eine Bewegungseinrichtung (10) mit mindestens einer ersten Achse (13) und mindestens einer zweiten Achse (14), welche eine höhere Reaktionsgeschwindigkeit aufweist als die erste Achse (13), wobei die Steuerung (1, 21, 25, 27, 34, 45, 49) eine Stellgröße ($S_A$, $S_P$) zur Ansteuerung der Achsen (13, 14) der Bewegungseinrichtung (10) ausgibt, **dadurch gekennzeichnet, dass** die Steuerung (1, 21, 25, 27, 34, 45, 49) eine Steuerungskomponente nach einem der Ansprüche 9 bis 13 aufweist.

15. Steuerung nach Anspruch 14, **dadurch gekennzeichnet, dass** die Steuerung (1, 21, 25, 27, 34, 45, 49) eine Recheneinheit (5) mit einer absoluten und/oder differentiellen kinematischen Transformation (23, 26, 43) aufweist.

16. Steuerung nach Anspruch 14 oder 15, **dadurch gekennzeichnet, dass** die Steuerung (1, 21, 25, 27, 34) eine insbesondere sensorbasierte Positionsregelung (2) aufweist.

17. Steuerung nach Anspruch 16, **dadurch gekennzeichnet, dass** die Positionsregelung (2) eine Proportional-Integral-Regelung und/oder eine Regelung mit doppelt integrierendem Regelverhalten ist.

## Claims

1. A method of influencing the controller (1, 21, 25, 27, 34, 45, 49) and/or of controlling a motion mechanism (10) with at least a first axis (13) and at least a second axis (14) which has a higher reaction speed than the first axis (13), in which case at least one output ($S_A$, $S_P$) of the controller (1, 21, 25, 27, 34, 45, 49) is determined for controlling the axes (13, 14) of the motion mechanism (10), the output ($S_A$, $S_P$) produced by the controller (1, 21, 25, 27, 34, 45, 49) being split, dependent upon frequency and/or as a function of dynamic properties of the axes (13, 14), in particular as a function of the accelerating power, mechanical vibrational behaviour, position of the axes (13, 14) and/or operating conditions of the motion mechanism (10), into at least two signals ($S_{A1}$, $S_{A2}$, $S_{P1}$, $S_{P2}$), which are used for controlling different axes (13, 14), **characterized in that**, on splitting of the controller output ($S_A$, $S_P$), it is checked by means of a projection (22, 43) in a kinematically redundant situation as to which motion components of the controller output ($S_A$, $S_P$) can be performed by which axes (13, 14) or groups of axes (13, 14), and **in that** the signals ($S_{P1}$, $S_{P2}$) $S_{A1}$, $S_{A2}$), which are split dependent upon frequency and/or as a function of dynamic properties of the axes (13, 14), are correction values for a main controller output ($S_1$, $S_2$).

2. A method according to Claim 1, **characterized in that** the signal ($S_{P1}$, $S_{A1}$) with the low-frequency signal component is associated with the first axis (13) or a first group of several axes (13), and the signal ($S_{P2}$, $S_{A2}$) with the high-frequency component is associated with the second axis (14) or a second group of several axes (14), the axes (13) of the first group having a lower reaction speed than the axes (14) of the second group.

3. A method according to Claim 1 or 2, **characterized in that** the controller output ($S_A$, $S_P$) is split into more than two signals with different frequency ranges.

**4.** A method according to one of the preceding claims, **characterized in that** the controller output ($S_A$, $S_P$) is split into signals ($S_{A1}$, $S_{A2}$, $S_{P1}$, $S_{P2}$) with different frequency ranges by means of high- and/or low-pass filters (7, 46).

**5.** A method according to one of the preceding claims, **characterized in that** a separate dynamic filter (35, 36, 37) is specifically associated with each of the axes (13) or groups of axes (13) having the lower reaction speed.

**6.** A method according to Claim 5, **characterized in that** the dynamic filter (35, 36, 37) limits the build-up of speed and/or acceleration of the motion tasks and/or suppresses particular frequencies of the motion tasks.

**7.** A method according to one of the preceding claims, **characterized in that** the motion of the motion mechanism (10) is controlled based on sensor data.

**8.** A method according to one of the preceding claims, **characterized in that** a pre-controller is integrated into the controller (1, 21, 25, 27).

**9.** A control component for the controller (1, 21, 25, 27, 34, 45, 49) of a motion mechanism (10) with at least a first axis (13) and at least a second axis (14) having a higher reaction speed than the first axis (13), for processing an output ($S_A$, $S_P$) produced by the controller (1, 21, 25, 27) for controlling the axes (13, 14) of the motion mechanism (10), in which case the control component has a dividing filter (7) for the frequency-dependent splitting of the controller output ($S_A$, $S_P$) and/or dynamic filters (35, 36, 37) associated with the axes (13, 14) for splitting the controller outputs ($S_A$, $S_P$) as a function of dynamic properties of the axes (13, 14) into at least two signals ($S_{A1}$, $S_{A2}$, $S_{P1}$, $S_{P2}$), **characterized in that** a projection block (22, 43) is integrated into the control component, in particular into the dividing filter (7) and/or the filters (35, 36, 37), for splitting the motion components on the corresponding axes (13, 14), in which case it can be checked through the projection block upon splitting of the controller output ($S_A$, $S_P$) by means of the projection (22, 43) in a kinematically redundant situation as to which motion components of the controller output ($S_A$, $S_P$) can be performed by which axes (13, 14) or groups of axes (13, 14), and the controller output ($S_A$, $S_P$) can be split in such a way that the signals ($S_{P1}$, $S_{P2}$, $S_{A1}$, $S_{A2}$) to be split dependent upon frequency and/or as a function of dynamic properties of the axes (13, 14) are correction values for a main controller output ($S_1$, $S_2$).

**10.** A control component according to Claim 9, **characterized in that** the dividing filter (7) takes the form of a digital high- and/or low-pass filter.

**11.** A control component according to Claim 9 or 10, **characterized in that** a dynamic filter (35, 36, 37) is a filter for limiting the build-up of acceleration and/or speed of the motion tasks and/or a filter for suppressing particular frequencies.

**12.** A control component according to one of Claims 9 to 11, **characterized in that** a computer (5) for carrying out a differential or absolute transformation (23, 43) for generating a controller output ($S_{A1}$, $S_{A2}$) for the axial coordinates is integrated into the control component.

**13.** A control component according to one of Claims 9 to 12, **characterized in that** the control component is constructed as a computer programme product.

**14.** A controller for a motion mechanism (10) having at least a first axis (13) and at least a second axis (14) which has a higher reaction speed than the first axis (13), in which case the controller (1, 21, 25, 27, 34, 45, 49) produces an output ($S_A$, $S_P$) for controlling the axes (13, 14) of the motion mechanism (10), **characterized in that** the controller (1, 21, 25, 27, 34, 45, 49) has a control component according to one of Claims 9 to 13.

**15.** A controller according to Claim 14, **characterized in that** the controller (1, 21, 25, 27, 34, 45, 49) includes a computer (5) with an absolute and/or differential kinematic transformation (23, 26, 43).

**16.** A controller according to Claim 14 or 15, **characterized in that** the controller (1, 21, 25, 27, 34) has a specifically sensor-based position control device (2).

**17.** A controller according to Claim 16, **characterized in that** the position control device (2) is a proportional-integral controller and/or a controller with double-integrating control behaviour.

**Revendications**

**1.** Procédé pour influencer la commande (1, 21, 25, 27, 34, 45, 49) et/ou pour la commande d'un dispositif de déplacement (10) comprenant au moins un premier axe (13) et au moins un second axe (14), qui présente une vitesse de réaction plus grande que le premier axe (13), dans lequel au moins une grandeur de réglage ($S_A$, $S_P$) de la commande (1, 21, 25, 27, 34, 45, 49) est enregistrée pour l'actionnement des axes (13, 14) du dispositif de déplacement (10), la grandeur de réglage ($S_A$, $S_P$) délivrée par la commande (1, 21, 25, 27, 34, 45, 49) étant divisée en fonction de la fréquence et/ou en fonction de propriétés dynamiques des axes (13, 14), en particulier en fonction du pouvoir d'accélération, du comportement aux vibrations mécaniques, de la position des axes (13, 14) et/ou des conditions d'exploitation du dispositif de déplacement (10), en au moins deux signaux ($S_{A1}$, $S_{A2}$, $S_{P1}$, $S_{P2}$), lesquels sont utilisés pour l'actionnement de différents axes (13, 14), **caractérisé en ce que**, lors de la division de la grandeur de réglage ($S_A$, $S_P$), on vérifie au moyen d'une projection (22, 43) dans une situation surdéterminée au plan cinématique quelles fractions de déplacement de la grandeur de réglage ($S_A$, $S_P$) peuvent être réalisées par quels axes (13, 14) ou groupes d'axes (13, 14), et **en ce que** les signaux ($S_{P1}$, $S_{P2}$, $S_{A1}$, $S_{A2}$) dépendants de la fréquence et/ou divisés en fonction de propriétés dynamiques des axes (13, 14) sont des valeurs de correction pour former une grandeur de réglage principale ($S_1$, $S_2$).

2. Procédé selon la revendication 1, **caractérisé en ce que** le signal ($S_{P1}$, $S_{A1}$) est attribué avec la partie de signal basse fréquence au premier axe (13) ou à un premier groupe de plusieurs axes (13) et le signal ($S_{P2}$, $S_{A2}$) avec la partie haute fréquence est attribué au second axe (14) ou à un second groupe de plusieurs axes (14), les axes (13) du premier groupe présentant une vitesse de réaction plus faible que les axes (14) du second groupe.

3. Procédé selon la revendication 1 ou 2, **caractérisé en ce que** la grandeur de réglage ($S_A$, $S_P$) est divisée en plus de deux signaux avec différentes plages de fréquences.

4. Procédé selon l'une des revendications précédentes, **caractérisé en ce que** la grandeur de réglage ($S_A$, $S_P$) est divisée au moyen d'un filtre passe-haut et/ou d'un filtre passe-bas (7, 46) en signaux ($S_{A1}$, $S_{A2}$, $S_{P1}$, $S_{P2}$) avec différentes plages de réglage.

5. Procédé selon l'une des revendications précédentes, **caractérisé en ce qu'**à chaque fois un filtre (35, 36, 37) dynamique propre est attribué en particulier aux axes (13) et aux groupes d'axes (13) avec une vitesse de réaction assez faible.

6. Procédé selon la revendication 5, **caractérisé en ce que** le filtre (35, 36, 37) dynamique effectue une limitation d'accroissement de la vitesse et/ou de l'accélération des spécifications de déplacement et/ou une suppression de fréquences spéciales des spécifications de déplacement.

7. Procédé selon l'une des revendications précédentes, **caractérisé en ce que** le déplacement du dispositif de déplacement (10) est réglé sur la base d'informations de capteur.

8. Procédé selon l'une des revendications précédentes, **caractérisé en ce qu'**une précommande est intégrée dans la commande (1, 21, 25, 27).

9. Composante de commande pour la commande (1, 21, 25, 27, 34, 45, 49) d'un dispositif de déplacement (10) comprenant au moins un premier axe (13) et au moins un second axe (14), qui présente une vitesse de réaction supérieure au premier axe (13), pour le traitement d'une grandeur de réglage ($S_A$, $S_P$) éditée par la commande (1, 21, 25, 27) pour l'actionnement des axes (13, 14) du dispositif de déplacement (10), la composante de commande présentant un circuit diviseur de fréquence (7) pour la division en fonction de la fréquence de la grandeur de réglage ($S_A$, $S_P$) et/ou des filtres (35, 36, 37) dynamiques, attribués aux axes (13, 14), pour la division des grandeurs de réglage ($S_A$, $S_P$) en fonction de propriétés dynamiques des axes (13, 14) en au moins deux signaux ($S_{A1}$, $S_{A2}$, $S_{P1}$, $S_{P2}$), **caractérisée en ce qu'**un bloc de projection (22, 43) destiné à la division des fractions de déplacement entre les axes (13, 14) correspondants est intégré dans la composante de commande, en particulier dans le circuit diviseur de fréquence (7) et/ou les filtres (35, 36, 37), sachant que, dans une situation surdéterminée au plan cinématique, on peut vérifier par le bloc de projection lors de la division de la grandeur de réglage ($S_A$, $S_P$) au moyen de la projection (22, 43) quelles fractions de déplacement de la grandeur de réglage ($S_A$, Sp) peuvent être réalisées par quels axes (13, 14) ou groupes d'axes (13, 14), et la division de la grandeur de réglage ($S_A$, $S_P$) peut être réalisée de telle sorte que les signaux ($S_{P1}$, $S_{P2}$, $S_{A1}$, $S_{A2}$), dépendants de la fréquence et/ou divisés en fonction de propriétés dynamiques des axes (13, 14), sont des valeurs de correction pour une grandeur de réglage principale ($S_1$, $S_2$).

10. Composante de commande selon la revendication 9, **caractérisée en ce que** le circuit diviseur de fréquence (7) est conçu sous forme de filtre numérique passe-haut et/ou de filtre numérique passe-bas.

11. Composante de commande selon la revendication 9 ou 10, **caractérisée en ce qu'**un filtre (35, 36, 37) dynamique est un filtre destiné à limiter l'augmentation d'accélération et/ou l'augmentation de vitesse des spécifications de déplacement et/ou un filtre pour la suppression de fréquences spéciales.

12. Composante de commande selon l'une des revendications 9 à 11, **caractérisée en ce qu'**une unité de calcul (5) destinée à mettre en oeuvre une transformation différentielle ou absolue (23, 43) est intégrée dans la composante de commande pour générer une grandeur de réglage ($S_{A1}$, $S_{A2}$) pour les coordonnées d'axe.

**13.** Composante de commande selon l'une des revendications 9 à 12, **caractérisée en ce que** la composante de commande est conçue sous forme de produit de programme informatique.

**14.** Commande pour un dispositif de déplacement (10) comprenant au moins un premier axe (13) et au moins un second axe (14), qui présente une vitesse de réaction plus grande que le premier axe (13), la commande (1, 21, 25, 27, 34, 45, 49) délivrant une grandeur de réglage ($S_A$, $S_P$) pour l'actionnement des axes (13, 14) du dispositif de déplacement (10), **caractérisée en ce que** la commande (1, 21, 25, 27, 34, 45, 49) présente une composante de commande selon l'une des revendications 9 à 13.

**15.** Commande selon la revendication 14, **caractérisée en ce que** la commande (1, 21, 25, 27, 34, 45, 49) présente une unité de calcul (5) avec une transformation (23, 26, 43) cinématique absolue et/ou différentielle.

**16.** Commande selon la revendication 14 ou 15, **caractérisée en ce que** la commande (1, 21, 25, 27, 34) présente un réglage de position (2) en particulier basé sur capteur.

**17.** Commande selon la revendication 16, **caractérisée en ce que** le réglage de position (2) est un réglage proportionnel et intégral et/ou un réglage avec comportement de réglage doublement intégrant.

Fig.1

Fig.2A

Fig.2B

Fig.2C

Fig.3

Fig.4

Fig.5

Fig.6

**Fig.7**

**Fig.8**

# Fig.9

Fig. 10

Fig. 11

Fig. 12

Fig. 13

Fig. 14

EP 1 742 131 B1

Fig. 15